# EUROPÄISCHE PATENTANMELDUNG

(11) **EP 4 789 822 A1**
(43) Veröffentlichungstag der Anmeldung: **12.08.2026**
(21) Anmeldenummer: 25157071.9
(22) Anmeldetag: 11.02.2025
(51) Int. Cl.: B25J 9/16, G06V 20/52, G06V 40/10

(54) **MASCHINENABSICHERUNG MITTELS VERFOLGUNG VON KÖRPERTEILEN**

(71) Anmelder: SICK AG, 79183 Waldkirch (DE)
(72) Erfinder: Hofmann, Dr. Christoph, 79108 Freiburg (DE); Schott, Michael, 79115 Freiburg (DE); Soundararajan, Saiharan, 79114 Freiburg (DE)

(57) **Zusammenfassung**

Computerimplementiertes Verfahren zur Absicherung einer Maschine in einer kollaborierenden Anwendung, wobei in einem ersten Schritt das Bild eines Arbeitsbereiches durch mindestens einen optoelektronischen Sensor bereitgestellt wird, sowie ein definiertes Körpermodell mit Köpermodell-3D-Landmarken. Die Bilder werden in eine Verarbeitungskette, welche auf neuronalen Netzen basierende Modelle zur Erkennung von 3D-Landmarken von Körperteilen umfasst, eingegeben. Mindestens ein Modell der Verarbeitungskette ist eingerichtet 3D-Landmarken eines relevanten Körperteils einer Person im Arbeitsbereich zu erkennen und mindestens ein Modell ist eingerichtet, eine Körperhaltung der Person zu erkennen. In einem letzten Schritt wird ein Steuerbefehls an eine Sicherheitssteuerung der Maschine ausgegeben. Der Steuerbefehl bewirkt eine Sicherheitsreaktion der Maschine, welche auf der Erkennung der für die Sicherheitsanwendung relevanten Körperteile und/oder auf der Erkennung der Körperhaltung der Person im Arbeitsbereich basiert.

## Beschreibung

Die vorliegende Erfindung betrifft das Gebiet der Absicherung eines kollaborativen Mensch - Maschine Arbeitsbereichs.

Kollaborative Robotersysteme können eine Lösung darstellen, wenn es darum geht einem Werker die Ausführung komplexer Tätigkeiten zu erleichtern, erfordern jedoch gleichzeitig aufgrund der Wechselwirkung zwischen Mensch und Maschine ein hohes Maß an Sicherheit, um den Werker vor der Maschine zu schützen.

Unter einer kollaborativen Anwendung sind Anwendungen zu verstehen, bei denen Mensch und Maschine ohne den Gebrauch weiterer Schutzvorrichtungen direkt neben- oder miteinander arbeiten. Der wachsende Bedarf an Mensch-Roboter Kollaborationen erfordert technische Regeln, weshalb exemplarisch auf die EN ISO 10218-1:2011 oder die ISO TS 15066:2016 verwiesen wird, was analoge Normen in beispielsweise anderen Ländern nicht ausschließen bzw. unberücksichtigt lassen soll.

Für die vorliegende Anmeldung sind insbesondere drei kollaborierende Anwendungen von Bedeutung, um die Sicherheit derartiger Systeme zu gewährleisten. Erstens, ein sicherheitsüberwachter Maschinenstopp. In diesem Fall arbeitet der Roboter bzw. die Maschine im Wesentlichen allein und der Roboter unterbricht die Arbeit, bzw. hält die Arbeit an, sobald ein Werker den Arbeitsbereich der Maschine betritt. Der Stillstand hält so lange an, bis der Werker den gemeinsamen Arbeitsbereich wieder verlässt. Zweitens, eine Geschwindigkeits- und Abstandsüberwachung. In diesem Fall wird der Abstand von Mensch und Roboter kontinuierlich überwacht. Bei Unterschreitung eines vorgeschriebenen Abstands reduziert sich die Geschwindigkeit des Roboters bis auf einen Sicherheitshalt. Mit anderen Worten, die Maschine passt ihre Geschwindigkeit in Bezug auf die Position des Werkers zur Maschine an, d.h. auf den Abstand zwischen Maschine und Werker in dem gemeinsamen Arbeitsbereich, wobei drei unterschiedliche Sicherheitsabstände (grün, gelb und rot) definiert sein können. Ein Sensorsystem überwacht dabei die Position des Werkers. Wenn der Werker näher an die Maschine herankommt, wird die Bewegung der Maschine verlangsamt. Wenn der Werker sich zu nahe an der Maschine befindet, d.h. in den roten Sicherheitsbereich eintritt, stoppt die Maschine. Drittens eine Leistungs- und Kraftbegrenzung durch inhärente Konstruktion und/oder Steuerung. Dabei wird das Gefährdungspotential des Menschen durch den Roboter durch die Beschränkung auf dynamische Parameter minimiert. Beispielsweise, indem Kräfte und Drehmomente überwacht werden, so dass eine Anwendung des Robotersystems innerhalb eines für einen Werker annehmbaren Sicherheitslevels in allen vorhersehbaren Situationen stattfindet. Im Folgenden müssen diese und weitere sicherheitsrelevante Szenarien nicht scharf getrennt werden. Es kommt darauf an, dass mit Hilfe eines Sensors oder mehrerer Sensoren und einer zugehörigen Auswertung eine Gefahr erkannt und daraus erforderlichenfalls eine angemessene Sicherheitsreaktion abgeleitet wird, um die Gesundheit von Personen entsprechend einem spezifizierten Sicherheitsniveau zu schützen.

Vorliegend ist der Begriff Sicherheit bzw. sichere Anwendung i.S. von Sicherheitsnormen wie beispielsweise der ISO 15066:2016 auszulegen.

*"Sicher"* und *"Sicherheit"* bedeuten wie in der gesamten Beschreibung, dass Maßnahmen ergriffen sind, um Fehler bis zu einem spezifizierten Sicherheitsniveau zu beherrschen beziehungsweise Vorschriften einer einschlägigen Sicherheitsnorm für Maschinensicherheit oder berührungslos wirkende Schutzeinrichtungen einzuhalten, von denen einleitend einige genannt sind. Nicht sicher ist der Gegenbegriff zu sicher, für nicht sichere Geräte, Übertragungswege, Auswertungen und dergleichen sind demnach die genannten Anforderungen an Fehlersicherheit nicht erfüllt.

Im Stand der Technik werden zur Absicherung kollaborativer Anwendungen bisher stationäre oder dynamisch anpassbare Schutzfelder, Schutzbereiche oder Gefahrenbereiche um die Maschine herum festgelegt und durch ein Sensorsystem überwacht. Beispielsweise beschreibt die DE 10 2004 043 514 A1 das Konzept der dynamischen Schutzfeldanpassung für eine automatisiert arbeitende Maschine. Das Schutzfeld kann in diesem Fall z.B. größer gewählt werden, wenn sich eine Person der Maschine nähert und kleiner, wenn sich die Person von der Maschine entfernt. Dabei ist eine Auswerteeinheit mit der Maschinesteuerung gekoppelt, um die für die Festlegung des Schutzfeldes erforderlichen Parameter zu erhalten. Diese sind die zukünftige bzw. die unmittelbar zukünftige Position, Bewegungsrichtung und/oder Bewegungsgeschwindigkeit der Maschine. Bei gleichzeitiger Erfassung der Position, Bewegungsgeschwindigkeit und Bewegungsrichtung der Person ermöglicht dies eine dynamische Anpassung des Schutzfeldes an eine jeweilige Arbeitssituation.

Nachteilig hieran ist, dass sich eine Person nicht im gefährlichen Arbeitsbereich des Roboterarms aufhalten kann, während der Roboterarm arbeitet, z.B. um die Arbeitsprozesse des Roboters zu überwachen, oder gleichzeitig mit dem Roboter ein Werkstück zu bearbeiten.

Ferner nachteilig ist, dass die Erkennung binär ist, d.h. ein Objekt wird festgestellt oder nicht. Es wird beispielsweise kein Objekttyp (Person, Fahrzeug) oder ein daran abgeleitetes Objektattribut (Kopf, Bein, Hand) übermittelt, weshalb es nicht möglich ist, die Schutzfeldgröße im Arbeitsbereich an die tatsächliche benötigte Schutzfeldgröße dynamisch anzupassen.

Die WO2013135608A1 bezieht sich ebenfalls auf das Absichern eines Arbeitsbereiches einer automatisiert arbeitenden Maschine. Dazu wird in einem Verfahrensschritt ein Schutzbereich in dem Arbeitsbereich der Maschine definiert. Eine Person wird im Schutzbereich durch einen Klassifizierer identifiziert und im Anschluss wird die identifizierte Person über einen Personenfolger über eine Serie von 3D Bildern verfolgt. Der Personenfolger bestimmt eine repräsentative Position der Person im Schutzbereich nach jedem neuen 3D Bild. In einer Ausführung kann der Personenfolger zusätzlich einen Körperteildetektor umfassen. Gemäß WO'608A1 dient dies dazu, einen Mindestabstand zwischen Person und Maschine zu bestimmen. In einer Ausführungsform des Verfahrens wird der Mindestabstand dazu verwendet, die Maschine anzuhalten, wenn die identifizierte Person näher an die Maschine herankommt als es durch den Mindestabstand bestimmt ist, so dass eine Art Sicherheitshülle um die Maschine darauf basierend minimiert werden kann.

Nachteilig an der WO'608A1 ist, dass der Personenverfolger lediglich zur Verfolgung einer Person ausgelegt ist, weshalb bei Anwesenheit einer weiteren Person, aus der Klassifizierung und Körperteildetektion als solcher keine sicheren Rückschlüsse zur Steuerung der Maschinen gezogen werden können. Denn wird beispielsweise eine Person durch eine weitere Person im Arbeitsbereich der Maschine verdeckt, so dass lediglich zwei linke oder insgesamt drei Hände detektiert werden, kann nicht auf die weitere Person und deren Position rückgeschlossen werden. Zwar werden die fehlersicheren Positionsdaten des Fremdobjektdetektors mit den insbesondere nicht fehlersicheren Positionsdaten des Personenfolgers zur Erhöhung der Sicherheit miteinander verglichen, d.h. verifiziert, allerdings erfolgt bei Nichtübereinstimmung der Positionsdaten grundsätzlich ein Maschinenstopp, d.h. eine differenzierte Absicherung ist nicht möglich.

Es ist daher eine Aufgabe der Erfindung ein Verfahren zur Absicherung eines kollaborativen Arbeitsbereichs zwischen einem Mensch und einer Maschine bereitzustellen.

Die Aufgabe wird gelöst durch das Verfahren nach Anspruch 1 und durch ein entsprechendes Computerprogrammprodukt.

Das erfindungsgemäße computerimplementierte Verfahren zur Absicherung einer Maschine, insbesondere in einer kollaborierenden Anwendung, weist die folgenden Schritte auf:
i. Bereitstellen mindestens eines Bildes eines Arbeitsbereichs der Maschine durch mindestens einen optoelektronischen Sensor, insbesondere durch eine RGBD-Kamera;
ii. Bereitstellen eines für eine Sicherheitsanwendung durch Vorgabe eines durch Körpermodell-3D-Landmarken definierten Körpermodells, so dass anhand der Körpermodell-3D-Landmarken die Positionen von für die Sicherheitsanwendung relevanten Körperteilen von mindestens einer Person in dem Arbeitsbereich der Maschine bestimmbar sind;
iii. Eingabe des Bildes in eine Verarbeitungskette, welche auf neuronalen Netzen basierende Modelle zur Erkennung von 3D-Landmarken von Körperteilen umfasst, wobei jeweils mindestens ein Modell der Verarbeitungskette eingerichtet ist, die 3D-Landmarken eines relevanten Körperteils, der für die Sicherheitsanwendung relevanten Körperteile der mindestens einen Person, zu erkennen und mindestens ein Modell eingerichtet ist, eine Körperhaltung der mindestens einen Person zu erkennen;
iv. Ausgabe eines Steuerbefehls an eine Sicherheitssteuerung der Maschine, um eine Sicherheitsreaktion der Maschine auszulösen, wobei die Sicherheitsreaktion der Maschine auf der Erkennung der für die Sicherheitsanwendung relevanten Körperteile und/oder auf der Erkennung der Körperhaltung der mindestens einen Person basiert.

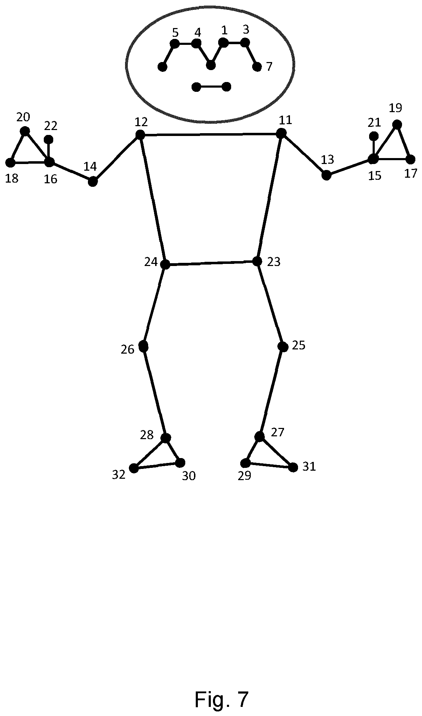

Unter einem definierten Körpermodell ist vorliegend ein für eine bestimmte Sicherheitsanwendung differenziertes Körpermodell zu verstehen, welches die für die Sicherheitsanwendung relevanten Körperteile umfasst. Als ein Körperteil soll vorliegend der Abschnitt eines menschlichen oder tierischen Körpers, der sich morphologisch und funktionell abgrenzen lässt, verstanden werden. Dies können große Körperabschnitte wie der Kopf, der Rumpf oder die Gliedmaßen, aber auch Teile dieser, wie Nase, Hand Finger Augen, etc. sein. Ein solches, für eine Sicherheitsanwendung definiertes Körpermodell ist beispielsweise in der ISO/TS 15066:2016 (siehe Fig. 7) angegeben. Das Modell differenziert zwischen der Vorder- und Rückseite einer Person, sowie zwischen 29 unterschiedlichen Landmarken. Um das Modell in Bewegung zu setzen, werden Bewegungsdaten (z.B. aus Motion-Capture-Systemen) verwendet. Diese Daten steuern die Positionen der Landmarken und ermöglichen es, realistische Bewegungen zu simulieren bzw. realistische Posen eines Körperteils zu simulieren, so dass ein auf die Erkennung eines Körperteils trainiertes Modell anhand der Posen, die durch das Körpermodell simuliert wurden, auf die Erkennung der 3D-Landmarken des Körpermodells trainiert werden kann. In diesem Fall kann das Modell auf die Erkennung der 3D-Landmarken vortrainiert sein und i.S. vom Transfer des bestehenden Trainingswissens (transfer learning) auf die Körpermodell-3D-Landmarken nachtrainiert werden.

Unter einer Landmarke sind vorliegend die dreidimensionalen Raumkoordinaten (XYZ) eines spezifischen Punktes zu verstehen, mit denen das Körpermodell die Position eines Körperteils im Raum beschreibt. Da es nicht ausreicht ein Körperteil durch Angabe einer einzelnen 3D-Landmarke zu erkennen oder dessen Position im Raum zu beschreiben, umfasst das Körpermodell zur eindeutigen Identifikation und Lageerkennung eines bestimmten Körperteils im Raum eine für dieses Körperteil vordefinierte Anzahl von 3D-Landmarken, die sich in einer jeweilige Position zueinander befinden. D.h. je nach Pose bzw. Haltung des bestimmten Körperteils bilden die 3D-Landmarken ein für das Körperteil spezifisches Muster, welches durch ein Modell, dass das Körpermodell zur Körperteilerkennung verwendet, von dem Modell auf einem vorgegebenen Bild erkannt wird. Beispielsweise kann eine Hand durch zwanzig unterschiedliche 3D-Landmarken beschrieben sein, die entlang bestimmter Linien, welche innerhalb der Handfläche und der Finger verlaufen, verteilt sind. Je nach Haltung der Finger ändern sich die Abstände der 3D-Landmarken zueinander sowie der Verlauf der Linien entlang derer die 3D-Landmarken positioniert sind. Ein Modell zur Handerkennung, welches ein solches Handmodell als Teil des definierten Körpermodells verwendet, wird anhand vorgegebener Bilder, welche die Hände beispielsweise eines Werkers umfassen, darauf trainiert, das spezifische Muster, welches die 3D-Landmarken in unterschiedlichen Posen der Hand miteinander bilden, auf den vorgegebenen Bildern mit einer bestimmten Wahrscheinlichkeit zu erkennen. Dies kann in einem Verarbeitungsschritt passieren, der der tatsächlichen Erkennung der Hand als solcher nachgelagert ist. D.h. das neuronale Netz lernt, die extrahierten Merkmale des Körperteils mit den Positionen der Landmarken zu verknüpfen. Dies geschieht oft durch die Verwendung von Heatmaps, die die Wahrscheinlichkeit anzeigen, dass sich eine Landmarke an einer bestimmten Position im Bild befindet.

Mit anderen Worten, dass Modell zur Identifikation und Bestimmung der räumlichen Lage von einem Körperteil umfasst neuronale Netze, die mittels Trainingsdaten darauf trainiert werden, dass Körperteil auf einem vorgegebenen Bild zu bestimmen und dann das für das jeweilige Körperteil repräsentative zweidimensionale Muster der 3D-Landmarken in unterschiedlichsten Posen des Körperteils auf dem Bild zu erkennen und die sich daraus ergebenden Raumkoordinaten (XYZ) der 3D-Landmarken zu berechnen und im Anschluss zur Weiterverarbeitung auszugeben.

Die Erkennung des Körperteils basiert dabei nicht unmittelbar auf der Erkennung aller vordefinierten 3D-Landmarken des jeweiligen Körperteils. Werden vordefinierte 3D-Landmarken eines Körperteils nicht erkannt, verschlechtert sich die Vorhersage Wahrscheinlichkeit, mit der das Modell vorgibt, ein jeweiliges Körperteil erkannt zu haben. Das Modell übergibt die erkannten 3D-Landmarken des Körperteils und einen Wert, der die Vorhersagewahrscheinlichkeit der Erkennung angibt, mit anderen Worten, inwieweit die Vorhersage des Modells auf die Realität zutrifft, d.h. ob das erkannte Körperteil dem tatsächlichen entspricht und dessen tatsächlicher Position im Raum.

Somit sind die Landmarken entscheidend für die präzise Erkennung und Analyse von Bewegungen, insbesondere in kollaborativen Robotersystemen, die sicher mit Menschen interagieren müssen. Ein Modell wie, z.B. MediaPipe Hands von Google erkennt Landmarken, d.h. spezifische Punkte, auf der Hand, wie die Gelenke der Finger und die Handfläche, welche charakteristische Punkte darstellen, die die Struktur der Hand definieren.

In einer Ausführungsform des Verfahrens werden diejenigen Körperteile, die für eine jeweilige Sicherheitsanwendung als relevante Körperteile erkannt werden sollen, durch einen Benutzer vorausgewählt. Beispielsweise umfasst das Verfahren eine Eingabevorrichtung, damit der Benutzer relevante Körperteile durch eine bereitgestellte graphische Oberfläche festlegen kann. Dazu ist auf der grafischen Oberfläche beispielsweise ein Skelettmodell einer Person mit den jeweiligen Landmarken der Körperteile dargestellt. Anhand dieser Darstellung kann der Benutzer beispielsweise durch Mausklick gewünschte Körperteile und deren dazugehörige Landmarken als relevante Körperteile markieren und das definierte Körpermodell so an die Sicherheitsanwendung anpassen.

Ein für eine Sicherheitsanwendung relevantes Körperteil ist vorliegend als ein Körperteil anzusehen, welches durch die Anwendung der Maschine im Arbeitsbereich als solches einer höheren Verletzungsgefahr ausgesetzt ist als andere Körperteile. Beispielsweise stellen bei einer Teilepresse die Hände eines Arbeiters, aber auch die jeweiligen Finger, relevante Körperteile dar, da der Arbeiter mit seinen Händen das von der Maschine zu bearbeitende Teil in die Maschine einlegt und es aus dieser mit den Händen herausnimmt. Folglich können bei einer Fehlfunktion der Maschine vor allem die Hände oder die Finger verletzt werden. Damit wären die Beine als nicht oder wenig relevante Körperteile für diese bestimme Anwendung anzusehen. In diesem Fall wäre eine geringere Vorhersage Wahrscheinlichkeit für die Erkennung der Beine akzeptabel.

Unter einer Verarbeitungskette ist vorliegend eine Abfolge von Verarbeitungsschritten zu verstehen, in der die Bilder des optoelektronischen Sensors verarbeitet werden, um den Steuerbefehl zu erzeugen und zur Steuerung der Maschine an die Sicherheitssteuerung der Maschine auszugeben. Die Verarbeitungskette umfasst die auf neuronalen Netzen (NN) basierenden Modelle zur Erkennung von Körperteilen durch Erkennung der 3D-Landmarken des Körpermodells.

In einem ersten Schritt des Verfahrens erfasst ein optoelektronischer Sensor den Arbeitsbereich der Maschine und erzeugt Bilder. Die Bilderzeugung und Bereitstellung erfolgt in Form einer kontinuierlichen Bildabfolge i.S. eines jeweiligen Bildrahmens, *"image frame",* als ein jeweiliges einzelnes Standbild einer Sequenz von Bildern, die zusammen ein Video oder eine Animation des Arbeitsbereichs abbilden. Dabei wird die Bildfolge durch mindestens einen optoelektronischen Sensor erzeugt, insbesondere durch eine RGBD-Kamera. Unter einem RGBD-optoelektronischem Sensor, ist ein Red, Green, Blue, Depth spezialisierter Kamerasensor zu verstehen, der sowohl Farbinformationen (RGB) als auch Tiefeninformationen (D) einer Szene erfasst. Der optoelektronische Sensor erfasst die Farben Rot, Grün und Blau, um ein vollständiges Farbbild des Arbeitsbereichs zu erzeugen, was der Funktionsweise einer herkömmlichen RGB-Kamera entspricht. Zusätzlich zu den Farbinformationen kann der optoelektronische Sensor die Tiefe, also die Entfernung zwischen der Kamera und den Objekten, z.B. einem Roboterarm, Personen, etc., am Arbeitsbereich erfassen. Die Tiefe kann der optoelektronische Sensor durch verschiedene Technologien wie Time-of-Flight (ToF), stereoskopische Kameras, oder strukturierte Lichtprojektion bestimmen. Der RGBD-optoelektronische Sensor kann die Farbinformationen und die Tiefeninformationen auf Pixelbasis kombinieren, um ein umfassendes Bild zu liefern, das sowohl die Farbe als auch die räumliche Tiefe der Objekte im Arbeitsbereich darstellt. Der optoelektronische Sensor kann zusätzlich eine Auswerteeinheit umfassen, um den Steuerbefehl an die Sicherheitssteuerung der Maschine auszugeben. Die Auswerteeinheit ist bevorzugt dafür eingerichtet, dass die Verarbeitungskette auf der Auswerteeinheit ausführbar ist, d.h. die Auswerteeinheit umfasst ausreichend Rechen- und Speicherkapazität

In einem zweiten Schritt des Verfahrens wird das für die Sicherheitsanwendung definierte Körpermodell bereitgestellt. Das Körpermodell umfasst die 3D-Landmarken der Körperteile als Körpermodell-3D-Landmarken. Dabei soll mit dem Begriff Körpermodell-3D-Landmarken von den 3D-Landmarken unterschieden werden, die durch ein Modell zur Erkennung eines relevanten Körperteils erkannt werden, d.h. auf die es beispielsweise vortrainiert wurde. Um die auf den 3D-Landmarken der Modelle basierenden Modellvorhersagen auf die Körpermodell-3D-Landmarken zu übertragen, können die Modelle auf das definierte Körpermodell nachtrainiert werden.

Vorteilhaft sind die Positionen der relevanten Körperteile zu jeder Zeit der Sicherheitssteuerung der Maschine bekannt. Darunter ist zu verstehen, dass die Erkennung bzw. Positionsbestimmung der relevanten Körperteile innerhalb eines Zeitabschnitts erfolgt, in dem die Position der Maschine oder des sich bewegenden Teils der Maschine kontrolliert bzw. überwacht wird. Eine Kontrolle der Position der Maschine erfolgt z.B. durch einen Positionsencoder, der über eine Regelschleife die Position in regelmäßigen Zeitabständen überwacht. Dieser Zeitabstand umfasst dann z.B. den Zeitabschnitt innerhalb dem die Positionen der relevanten Körperteile bekannt sein soll.

In einem dritten Schritt des Verfahrens erfolgt die Eingabe des Bildes in die Verarbeitungskette, welche die auf neuronalen Netzen basierenden Modelle umfasst. Die zur Erkennung von 3D-Landmarken eingerichteten Modelle können jeweils unterschiedliche neuronale Netze aufweisen. Beispielsweise sind die neuronalen Netze mittels unterschiedlicher Trainingsdaten auf die Erkennung eines relevanten Körperteils oder einer Körperhaltung trainiert und/oder weisen unterschiedliche Netzwerkarchitekturen auf. Wird ein relevantes Körperteil durch ein Modell erkannt, gibt das Modell Übergabedaten heraus, die die Körperteil-3D-Landmarken des relevanten Körperteils als Raumkoordinaten (X, Y, Z) umfassen. Zusätzlich können die Koordinaten einer Begrenzungsbox als Teil der Übergabedaten herausgegeben werden. Die Begrenzungsbox umrandet das relevante Körperteil, so dass die Position des relevanten Körperteils in dem Bild angezeigt werden kann. Die Ausgabe einer Begrenzungsbox ist beispielsweise beim anwendungsspezifischen Nach-Trainieren des Modells hilfreich, um die richtige Erkennung des relevanten Körperteils nachvollziehbar zu machen. Wird das relevante Körperteil nicht erkannt, werden entsprechende Informationen, z.B. Linke Hand = False (H(L) = false) zur Weiterverarbeitung ausgegeben, so dass die Übergabedaten des Modells die Information zusätzlich umfassen.

Mindestens ein Modell der Verarbeitungskette ist eingerichtet, die Landmarken eines relevanten Körperteils, der für die Sicherheitsanwendung relevanten Körperteile der mindestens einen Person in dem Arbeitsbereich der Maschine, zu erkennen und mindestens ein Modell ist eingerichtet, eine Körperhaltung bzw. Pose der mindestens einen Person zu erkennen. Das Modell zur Körperteilerkennung bildet im Prinzip einen ersten Detektionskanal in der Verarbeitungskette des Verfahrens und das Modell zur Posenerkennung einen dazu parallelen weiteren Detektionskanal. Durch die erkannte Pose der Person wird eine Art Zuordnungsvorschrift vorgegeben, durch die festlegt ist, wo sich beispielsweise der Arm oder der Fuß einer Person in einer jeweiligen Pose befindet. Ist die Position eines Armes beispielsweise bekannt, lassen sich darüber auch die Positionen der weiteren, erkannten Körperteile im Raum mit Hilfe der erkannten Pose überprüfen. D.h. die Erkennung einer Körperhaltung erlaubt es, dass die Positionen erkannter Körperteile auf eine jeweilige Person bezogen überprüft werden können. Ferner gilt, dass durch die erkannten 3D-Landmarken der jeweiligen Körperteile als solche den Körperteilen eine Position im Raum zugeordnet ist, weshalb die Posenerkennung als ein weiterer, redundanter Detektionskanal angesehen werden kann. Durch Kombination beider Detektionskanäle ist es vorteilhaft möglich, aus der Körperhaltung und der Position erkannter Körperteile auf die Position weiterer, insbesondere verdeckter Körperteile, kausal (Wenn - Dann Bedingung/Regel) rückzuschließen. Kausal bedeutet insbesondere, dass eine Regel beziehungsweise eine Wenn-Dann-Bedingung formuliert werden kann, die mindestens eine Position erkannter Körperteile mit mindestens einer weiteren Position eines Körperteils i.S. einer Zuordnungsvorschrift verknüpft. Dadurch wird das Verfahren robuster gegenüber einer Verdeckung oder Abschattung von Körperteilen. Grundsätzlich gilt, dass je mehr Detektionskanäle in Form von Modellen zur Erkennung von Körperteilen in der Verarbeitungskette verwendet werden, desto mehr kausale Rückschlüsse i.S. von Zuordnungsvorschriften lassen sich daraus ableiten und desto sicherer wird die Vorhersagesicherheit des Verfahrens insgesamt.

Das Modell zur Erkennung eines relevanten Körperteils ist dazu eingerichtet, das relevante Körperteil auch bei mehreren Personen zu erkennen. Ebenfalls ist das Modell zur Erkennung der Körperhaltung auf die Erkennung der Körperhaltung mehrerer Personen in dem Arbeitsbereich der Maschine eingerichtet.

Die für die Sicherheitsanwendung relevanten Körperteile werden durch Modelle erkannt, die spezifisch auf die Erkennung des jeweiligen relevanten Körperteiles trainiert sind, insbesondere vortrainiert sind, und/oder eine darauf spezifisch eingerichtete Netzwerkarchitektur aufweisen. Ein Modell weist beispielsweise eine Architektur auf, die sich zumindest in die folgenden Verarbeitungsschritte Vorverarbeitung, Erkennung, Vorhersage unterteilen lässt. Im Folgenden werden die Begriffe Modell und neuronales Netz synonym zueinander benutzt, es sei denn es wird explizit auf eine Unterscheidung verwiesen.

Durch Merkmalsextraktion der visuellen Merkmale durch die jeweiligen Modelle werden die 3D-Landmarken der für die Sicherheitsanwendung relevanten Körperteile in dem unter Schritt iii) eingegebenen Bild erkannt. Die Begriffe Landmarken und 3D-Landmarken werden synonym zueinander verwendet.

Eine mögliche Architektur der Merkmalsextraktion zur Erkennung von Landmarken von einem bestimmten Körperteil, wie zum Beispiel einer Hand, ist durch ein als Convolutional Neural Network (CNN) ausgebildetes neuronales Netz gegeben. In einer beispielhaften Ausprägung eines CNN wird in einer ersten Eingabeschicht das eingegebene Bild aufgenommen, wobei das Bild normalerweise als Matrix von Pixelwerten dargestellt ist. In einer zweiten Faltungsschicht (Convolutional Layer) wird eine Reihe von lernbaren Filtern, die über das gesamte Bild gleiten, dafür verwendet, Merkmale wie Kanten, Kurven und Texturen im Bild zu erkennen. In einer dritten Schicht des CNN wird eine nichtlineare Funktion auf das Bild angewendet, die alle negativen Werte im Bild auf null setzt. Damit lässt sich eine Nichtlinearität in dem CNN einführen, die die Leistung und Effizienz, bzw. die Generalisierungsfähigkeit des CNN verbessert. D.h. das CNN ist damit in der Lage, komplexe Muster in einem Bild zu erkennen und nicht lediglich lineare Zusammenhänge zwischen den Ein- und den Ausgabedaten. Eine vierte Poolingschicht (Pooling Layer) reduziert die räumliche Größe, d.h. die Breite und Höhe des eingegebenen Bildes. Beispielsweise kann das Maximum oder der Mittelwert eines jeweiligen Bildbereichs anstelle des gesamten Bildbereichs verwendet werden. Dies hilft, die Anzahl der Parameter zu reduzieren und ein Overfitting, d.h. eine verschlechterte Fähigkeit des CNNs zu generalisieren, zu vermeiden. Eine fünfte Schicht stellt die sogenannte vollständig verbundene Schicht (Fully Connected Layer) dar. Diese Schicht verbindet jedes Neuron der vorherigen Schicht mit jedem Neuron der nächsten Schicht. Die fünfte Schicht dient dazu, die durch die vorherigen Convolutional und Pooling Layer extrahierten Merkmale zu kombinieren und zu verarbeiten, so dass eine letzte Ausgabeschicht dazu dient, die 3D Koordinaten der erkannten Landmarken herauszugeben. Diese Koordinaten geben die Position der Landmarken im Raum an und ermöglichen eine Rekonstruktion des relevanten Körperteils, beispielsweise der Handposition und der Handhaltung. Die neuronalen Netze der jeweiligen Modelle können sich durch die Art und Anzahl der Schichten, die in einer Schicht verwendeten Filter etc. unterscheiden.

Da die Erkennung des relevanten Körperteils, wie beispielsweise einer Hand, auf der Bestimmung der Landmarken der Hand basiert und ein Körperteil typischerweise eine Vielzahl von Landmarken aufweist, ist es nicht notwendig alle Landmarken zu erkennen. Mit anderen Worten, selbst wenn beispielsweise bei einer Hand eine Anzahl von Fingern nicht erkannt wird, weil diese verdeckt sind, kann auf eine Hand mit einer bestimmten Wahrscheinlichkeit rückgeschlossen werden. Folglich ist das erfindungsgemäße Verfahren robuster gegenüber abschnittsweise Verdeckungen von Objekten bzw. Körperteilen.

Die beschriebene Architektur ist eine vereinfachte Darstellung einer CNN-Architektur, wobei das grundlegende Prinzip auch bei komplexeren CNN-Architekturen gültig bleibt. Das Prinzip besteht darin, dass eine Faltungsschicht, eine Nichtlinearisierungsschicht und gegebenenfalls eine Poolingschicht, dazu dienen, Merkmale der relevanten Körperteile aus den Bildern zu extrahieren, und mittels der vollständig verbundenen Schicht als repräsentatives Merkmal dem relevanten Körperteil zuordnen. Eine Merkmalsextraktion kann insbesondere auch durch mehrere CNNs erfolgen. Beispielsweise kann ein erstes CNN auf die Erkennung einer Handfläche optimiert sein und ein darauffolgendes, zweitens CNN, auf die Erkennung der weiteren 3D-Landmarken der an die Handfläche angrenzenden Finger. Mittels des durch die Handflächen Erkennung bereitgestellten Bildbereichs des ersten CNNs, wird die Erkennung der Finger effizient auf den durch die Handflächen vordefinierten Bildbereich eingegrenzt.

In dem erfindungsgemäßen Verfahren wird deshalb innerhalb der Verarbeitungskette mindestens ein CNN dazu verwendet, ein relevantes Körperteil zu erkennen. Damit sind in der Verarbeitungskette die CNNs bevorzugt unabhängig voneinander für die Erkennung desjenigen relevanten Körperteils zuständig auf das das CNN trainiert wurde. Die jeweiligen CNNs zur Merkmalsextraktion sind beispielsweise auf die Erkennung von Landmarken einer Hand, eines Gesichtes oder eines Armes trainiert, insbesondere vortrainiert.

Ein mögliches CNN zur Erkennung von Hand-Landmarken stellt das *"Media Pipe Hands" -* Modell von Google dar. Bei diesem Modell weist die Architektur einen *"Palmdetektor"* (Handflächendetektor) als ein erstes CNN auf, dass speziell auf die Erkennung von Handflächen optimiert ist. Ein weiteres CNN benutzt die von dem Palmdetektor übergegebenen Bildausschnitte, die die Handflächen aufweisen, dazu, die spezifischen Landmarken einer jeweiligen Hand zu identifizieren und deren 3D Koordinaten zu berechnen und auszugeben. Die Architektur des *"MediaPipe Hands"* Modells ist vorteilhaft so optimiert, dass eine Handerkennung in Echtzeit auf mobilen GPUs (Graphics Processing Units) ausgeführt werden kann, wodurch eine schnelle und effiziente Handverfolgung möglich ist, so dass die für die Sicherheitsanwendung relevante Handposition zu jeder Zeit bekannt ist.

Entsprechend stellt ein mögliches CNN zur Erkennung von einem Gesicht das *"Media Pipe Face"* - Modell von Google dar. Bei diesem Modell weist die Architektur einen "BlazeFace-Detektor" als ein erstes CNN auf, dass speziell auf die Erkennung von Gesichtern optimiert ist und wodurch es sich von dem Modell zur Handerkennung unmittelbar unterscheidet. Ein weiteres CNN *"Face Mesh"* erweitert die Gesichtserkennung, indem es 468 3D-Landmarkenpunkte auf dem Gesicht erkennt und eine detaillierte Modellierung der Gesichtsgeometrie und der Gesichtsorientierung in Echtzeit ermöglicht. D.h. auch die Architektur des *"MediaPipe Face"* Modells ist vorteilhaft so optimiert, dass sie in Echtzeit auf mobilen GPUs, wie sie beispielsweise von NVIDIA bereitgestellt werden, ausgeführt werden kann, wodurch eine schnelle und effiziente Handverfolgung möglich ist, so dass die für die Sicherheitsanwendung relevante Handposition zu jeder Zeit in Bezug auf eine Position der Maschine bekannt ist.

Ein mögliches CNN zur Erkennung einer Körperhaltung, bzw. einer Pose, stellt "BlazePose" von Google dar. "BlazePose" ist ein Modell zur Echtzeit-Körperhaltungserkennung, das speziell für mobile Geräte optimiert ist und daher wenig Rechenkapazität erfordert. Es ist trainiert 33 2D-Landmarken des menschlichen Körpers aus einem einzigen Bildrahmen zu erkennen. In einem ersten Schritt werden Handflächen in dem Bildrahmen erkannt. Dies geschieht durch ein neuronales Netz, dass auf die Erkennung von Handflächen trainiert ist. Sobald die Handflächen erkannt wurden, wird ein rechteckiger Bereich um jede Handfläche definiert und als Eingabe für das nächste neuronale Netz innerhalb von "BlazePose" verwendet. Das nächste neuronale Netz in der Verarbeitungskette von "BlazePose" ist speziell darauf trainiert, Positionen von Gelenken und Gliedmaßen in Form von 3D-Landmarken zu erkennen. In einem weiteren, darauffolgenden neuronalen Netz wird mittels der übergebenen 3D-Landmarken die Körperhaltung geschätzt, indem diese aus den Positionen und Winkeln der unterschiedlichen Körperteile zueinander berechnet wird.

Alternativ kann auch das Modell PoseNet verwendet werden. PoseNet weist ein CNN auf, das aus dem eingegebenen Bild diejenigen Merkmale extrahiert, die wichtige Informationen über die Struktur und das Aussehen der im Bild enthaltenen Personen beinhalten. Dabei schätzt PoseNet mittels einer Regression, die x- und y-Koordinaten der Gelenke im Bild ab, bzw. sagt diese vorher. Dabei kann das Modell die geschätzten Positionen der wichtigsten Körpergelenke, wie Schultern, Ellbogen, Handgelenke, Hüften, Knie und Knöchel ausgeben. Diese Koordinaten können dann verwendet werden, um die Pose, bzw. Körperhaltung der Person zu rekonstruieren. PoseNet stellt eine schnelle und effiziente Posen Erkennung dar, so dass die für die Sicherheitsanwendung relevante Körperhaltung einer oder mehrere Personen, zusammen mit den Positionen der relevanten Körperteile zu jeder Zeit bekannt ist.

In einem vierten Schritt des Verfahrens wird ein Steuerbefehl an eine Sicherheitssteuerung der Maschine ausgegeben, der eine Sicherheitsreaktion der Maschine auslöst, wobei die Sicherheitsreaktion der Maschine auf der Erkennung der für die Sicherheitsanwendung relevanten Körperteile und/oder auf der Erkennung der Körperhaltung der mindestens einen Person basiert.

Vor der Ausgabe des Steuerbefehls zur Sicherheitssteuerung der Maschine in Schritt iv), können die Schritte i) - iii) wiederholt werden, so dass die Sicherheitsreaktion der Maschine im Wesentlichen auf einer Bildfolge basiert.

Das erfindungsgemäße Verfahren hat den Vorteil, dass der Steuerbefehl eine differenzierte Sicherheitsreaktion der Maschine auslöst. Mit anderen Worten, die Sicherheitsreaktion der Maschine erfolgt angepasst an ein bestimmtes Körperteil. Wird beispielsweise ein Bein einer Person in einem Sicherheitsbereich um die Maschine herum erkannt, reicht es aus die Geschwindigkeit einer Maschinenbewegung zu reduzieren. Im Falle der Erkennung einer Hand im Sicherheitsbereich der Maschine würde die Maschinenbewegung gestoppt werden, da eine Hand ein sensibleres Körperteil darstellt. Ferner vorteilhaft kann die Sicherheitsreaktion der Maschine auf die Körperhaltung einer Person oder mehrere Personen angepasst sein. Beugt sich beispielsweise ein Werker mit dem Kopf nach vorne in Richtung der Maschine würde dies einen Nothalt auslösen. Das erfindungsgemäße Verfahren erlaubt ferner, die Reaktion der Maschine auf die biomechanischen Eigenschaften des relevanten Körperteils anzupassen. Beispielsweise kann eine Kraftausübung der Maschine auf die, in der Sicherheitsnorm für das relevante Körperteil erlaubte Kraftausübung zwischen der Person und der Maschine, als eine Sicherheitsreaktion der Maschine reduziert werden. Somit lässt sich der Arbeitsbereich der Maschine weiter differenziert überwachen.

Die für die Sicherheitsanwendung relevanten Körperteile sollen insbesondere zu jeder Zeit der Sicherheitssteuerung der Maschine bekannt sein, so dass je nach Position der relevanten Körperteile, die Maschine in einen bestimmten Betriebsmodus gebracht werden kann i.S. einer Sicherheitsreaktion durch die Sicherheitssteuerung umgeschaltet werden kann. Eine Sicherheitsreaktion umfasst demnach unterschiedliche Betriebsmodi i.S. unterschiedlicher kollaborierender Anwendungen zwischen Mensch und Maschine. Beispielsweise, je nach Abstand eines relevanten Körperteils kann der sicherheitsüberwachte Maschinenstopp, eine Reduzierung der Geschwindigkeit der Maschinenbewegung, oder eine Leistungs- und Kraftbegrenzung bewirken.

In einer besonders bevorzugten Ausführungsform werden die von den Modellen erkannten 3D-Landmarken von Körperteilen, den Körpermodell-3D-Landmarken der relevanten Körperteile zugeordnet und als Übergabedaten an ein Datenverknüpfungsmodul der Verarbeitungskette übergeben werden.

In der Ausführungsform umfasst die Verarbeitungskette das Datenverknüpfungsmodul. Die Zuordnung der 3D-Landmarken auf die Körpermodell-3D-Landmarken kann durch ein Nachtrainieren der Modell erfolgen. Dieser Prozess wird als Transfer Learning bezeichnet. Dabei sind die in der Verarbeitungskette verwendeten Modelle bereits auf einem großen Datensatz trainiert und gut darin, allgemeine Merkmale zu erkennen. In einem Verfahrensschritt, der als Feintuning bezeichnet werden kann, wird das vortrainierte Modell dann auf den neuen Datensatz mit den spezifischen Körpermodell-3D-Landmarken des neuen, definierten Körpermodells weitertrainiert. Dies erfordert weniger Daten und Rechenleistung als das grundlegende Training eines Modells. Oft werden dabei nur die letzten Schichten des neuronalen Netzes angepasst, während die früheren Schichten, die allgemeine Merkmale extrahieren, unverändert bleiben. Dies ermöglicht es dem Modell, spezifische Details des neuen, definierten Körpermodells zu lernen, während es die bereits gelernten allgemeinen Merkmale beibehält. Nach dem Feintuning wird das Modell evaluiert und weiter optimiert, um sicherzustellen, dass es die neuen Landmarken präzise erkennt.

In einer alternativen Ausführungsform umfassen die 3D-Landmarken bereits die Körpermodell-3D-Landmarken und/oder sind im Wesentlichen aus diesen ableitbar, beispielsweise analytisch.

Ferner alternativ kann eine Verknüpfung der 3D-Landmarken mit den Körpermodell-3D-Landmarken durch ein weiteres neuronales Netz erfolgen. Beispielsweise kann das weitere neuronale Netz darauf trainiert werden, anhand der 3D-Landmarken einer Pose, die durch das Modell zur Erkennung der Körperhaltung erkannt wurde, auf die Körperteil-3D-Landmarken rückzuschließen. Dazu werden die Positionen der Körpermodell-3D-Landmarken des definierten Körpermodells durch das neuronale Netz verändert, bis die Pose nachgebildet ist. Mit anderen Worten, das weitere neuronale Netz lernt, wie das definierte Körpermodell auf eine jeweilige Pose angepasst werden muss.

In einer Ausführungsform werden in Schritt iii) des Verfahrens mittels einer Datenverknüpfung des Datenverknüpfungsmoduls die Körpermodell-3D-Landmarken der Übergabedaten anhand des Körpermodells auf Plausibilität und Vollständigkeit überprüft. Anhand der überprüften Körpermodell-3D-Landmarken wird auf von den Modellen nicht erkannte Körpermodell-3D-Landmarken des Körpermodells geschlossen, um die Erkennung der Körpermodell-3D-Landmarken des Körpermodells zu vervollständigen.

Die Pose der Person ist wie eine Zuordnungsvorschrift, durch die festlegt wird, wo sich beispielsweise der Arm oder der Fuß einer Person befindet und die damit die Positionen der jeweiligen erkannten weiteren Körperteile im Raum miteinander verknüpft.

Weil die Überprüfung auf den erkannten Körpermodell-3D-Landmarken basiert und nicht auf Bilddaten, bietet die Ausführungsform den Vorteil, dass die Erkennung robuster gegenüber Verdeckungen ist, da ein relevantes Körperteil, obwohl es beispielsweise im Bild teilweise verdeckt ist, noch immer erkannt wird. Das liegt daran, dass das Körpermodell vorschreibt, wie die Körperteile grundsätzlich zueinander angeordnet sein müssen. Beispielsweise an welcher Position ein linker oder rechter Arm sein muss. Eine solche räumliche Landmarken Zuordnungsvorschrift wäre beispielsweise, dass neben einer erkannten Landmarke weitere, benachbarte Landmarken in einem durch das Körpermodell vorgegebenen Abstand vorhanden sein müssen. Eine logische Landmarken Zuordnungsvorschrift wäre beispielsweise, dass wenn die Landmarken einer rechten Hand vorhanden sind und das Körpermodell eine linke und rechte Hand definiert hat, auch die Landmarken der linken Hand grundsätzlich vorhanden sein müssen. Basierend auf derartigen Relationen bzw. Zuordnungsvorschriften, werden zur Überprüfung der Übergabedaten auf Plausibilität und Vollständigkeit die Körpermodell-3D-Landmarken anhand von aus dem Körpermodell abgeleiteten Regeln miteinander verknüpft. Da aus dem Körpermodell unzählige unterschiedliche Regeln ableitbar sind, sollen nur wenige der möglichen Regeln beispielhaft beschrieben werden.

Eine verneinende Regel wäre, dass eine hängende rechte Hand aufgrund der Positionen der Landmarken festgestellt wird. Eine hängende Hand kann aber nicht in die Maschine eingreifen, weil die dazu z.B. ausgestreckt werden müsste. Folglich würde nach dieser Regel keine Sicherheitsreaktion der Maschine ausgelöst, obwohl sich die Hand in der Nähe der Maschine befindet. Ferner kann eine Person nicht zwei rechte Hände aufweisen, so dass wenn zwei rechte Hände festgestellt werden, eine weitere Person anwesend sein muss.

Eine Umgebungsregel wäre, dass die im Körpermodell vorgegebenen Körperteile auch erkannt werden müssen. Wobei ein Handerkennungsmodell eventuell nur eine linke Hand erkennt. In diesem Fall werden die Landmarken der weiteren Modell verwendet, um auf die Position der Hand zu schließen. Beispielsweise aus der Pose der Person, d.h. mit dem Modell zur Erkennung der Körperhaltung. Aus den Positionen der Arme kann auf die Position der Hand geschlossen werden. Ein weiteres Beispiels einer Umgebungsregel, wäre dass aus einer erkannten Landmarke auf die weiteren, zu der erkannten unmittelbar benachbarten Landmarken geschlossen wird, i.S. einer Nachbarschaftsrelation. Wird ein Fußgelenk erkannt, sollten auch die weiteren Landmarken des Fuß erkannt werden. Dabei gibt das Körpermodell vor, innerhalb welches Abstandes eine benachbarte Landmarke zu erwarten ist, so dass die Position der zu erwartenden Landmarke auf einer Fläche mit dem Radius R um die erkannte Landmarke herum sein muss. Darauf basierend kann bei Nichterkennung der benachbarten Landmarke eine Sicherheitsreaktion erfolgen.

Die Regeln berücksichtigen vorteilhaft die Wahrscheinlichkeit der Vorhersage eines Modells. Ein jeweiliges Modell berechnet zu jeder 3D-Landmarke einen Sicherheitswert (Confidence Score) der mit den Übergabedaten ausgegeben wird. Der Sicherheitswert beschreibt, wie sicher die vom Modell für das relevante Körperteil vorhergesagten X, Y, Z Raumkoordinaten einer Landmarke tatsächlich sind. Werden beispielsweise in einem ersten Fall zwei linke Hände mit einem hohen Sicherheitswert erkannt, aber nur eine rechte Hand, ergibt eine logische UND-Verknüpfung der Übergabedaten des Modells, dass das Ergebnis der Erkennung nicht plausibel ist, da eine weitere rechte Hand fehlt. Würde jedoch in einem anderen Fall die Erkennung der zweiten linken Hand einen niedrigen Sicherheitswert aufweisen, könnte es sich bei der zweiten linken Hand um eine Fehlerkennung handeln. Um eine Fehlerkennung im Wesentlichen auszuschließen, wird in einer Ausführungsform ein Schwellwert festgelegt, z.B. ein Wert zwischen 0 (0%) und 1 (100%), ab dem ein relevantes Körperteil als *"sicher erkannt"* gilt, beispielsweise dann, wenn der Sicherheitswert größer als der vorgegebene Schwellwert von z.B. 0,75 ist. In diesem Beispiel wird zur Veranschaulichung vereinfachend angenommen, dass alle Körperteile im Erfassungsbereich der Kamera sind.

In einer bevorzugten Ausführungsform werden in einer ersten Verknüpfung die Übergabedaten des jeweils mindestens einen, zur Erkennung von 3D-Landmarken eines relevanten Körperteils eingerichteten Modells, innerhalb des jeweiligen Modells miteinander verknüpft werden und in einer zweiten Verknüpfung die Übergabedaten der jeweiligen, zur Erkennung von 3D-Landmarken der relevanten Körperteile eingerichteten Modelle, über die Modelle hinweg untereinander verknüpft werden.

Die Überprüfung wird dadurch strukturiert, um zu vermeiden, dass bei der im Anschluss durchgeführten weiteren, zweiten Verknüpfung fehlerhafte Übergabedaten der jeweiligen Modelle übernommen werden. Die Ausweitung der Plausibilitätsprüfung auf alle Übergabedaten der Modelle erhöht die Sicherheit der Modellvorhersage insgesamt. Beispielsweise wird die Erkennung einer linken Hand durch das Modell zur Handerkennung in der ersten Verknüpfung plausibilisiert. Eine Plausibilisierung der Zuordnung der Hand zu einer der Personen im Arbeitsbereich erfolgt erst in der zweiten Verknüpfung.

In einer Ausführungsform ist das Modell zur Erkennung der Körperhaltung eingerichtet, auch die Körpermodell-3D-Landmarken der für die Sicherheitsanwendung relevanten Körperteile zumindest teilweise zu erkennen.

Dies hat den Vorteil, dass aus den Landmarken der Posenerkennung immer auch zumindest eine Landmarke des relevanten Körperteils überprüft werden kann. Damit lassen sich die Ergebnisse der Modelle einfacher einer jeweiligen Person zuordnen.

Weiter bevorzugt wird ein für die Sicherheitsanwendung relevantes Körperteil der relevanten Körperteile durch jeweils ein Modell erkannt. Dies hat den Vorteil, dass ein jeweiliges Modell sehr spezifisch auf die Erkennung genau dieses Körperteils trainiert ist und die Vorhersagesicherheit deshalb erhöht ist gegenüber Modellen, die auf die Erkennung einer Vielzahl von Körperteilen trainiert sind, da letztere Modelle eine breite Palette von Merkmalen und Variationen berücksichtigen müssen, was deren Komplexität erhöht, zu niedrigeren Sicherheitswerten führt und eine höhere Rechenleistung bedingt, was wiederum die Vorhersagegeschwindigkeit im vorliegenden Fall unvorteilhaft herabsetzt.

In einer Ausführungsform ist mindestens ein Modell der Modelle eingerichtet, anhand des Körpermodells, zwischen einer Vorder- und Rückseite einer Person zu differenzieren. Diese zusätzliche Differenzierung ist bevorzugt durch ein Modell zur Gesichtserkennung umgesetzt. Dies erlaubt vorteilhaft, dass durch die Verknüpfung der Übergabedaten des Modells zur Gesichtserkennung mit dem Modell zur Erkennung der Körperhaltung, eine Lauf- bzw. Bewegungsrichtung der Person im Arbeitsbereich festgestellt werden kann. Basierend ob sich die Person in Richtung der Maschine oder von dieser weg bewegt, wird die Sicherheitsreaktion der Maschine differenziert angepasst. Ein solches Modell kann der ISO/TS 15066:2016 entnommen sein.

In einer Ausführungsform ist mindestens ein Modell der Modelle eingerichtet, anhand des Körpermodells, Hände als relevante Körperteile, der für die Sicherheitsanwendung relevanten Körperteile zu erkennen und mindestens ein Modell eingerichtet ist, Gesichter als relevante Körperteile, der für die Sicherheitsanwendung relevanten Körperteile zu erkennen.

In einer Ausführungsform ist mindestens ein Modell der Modelle eingerichtet, einen Bereich in dem eingegebenen Bild der mindestens einen Person als einen Personenbereich abzugrenzen. Das Modell ist bevorzugt als ein Modell zur Personenerkennung ausgebildet. Das Modell zur Erkennung der Körperhaltung kann das Modell zur Personenerkennung umfassen. Das Modell zur Personenerkennung ist den weiteren Modellen der Verarbeitungskette vorgeschaltet, indem es das in die Verarbeitungskette eingegebene Bild in Personenbereiche aufteilt und diese an die weiteren Modelle der Verarbeitungskette zur Erkennung der Körperteile der Personen übergibt. Damit wird die Bildverarbeitung auf einen kleineren Datensatz der Personenbereiche vorteilhaft beschränkt, was die Rechenzeit und den Rechenaufwand reduziert. Dies ist insbesondere dann relevant, wenn das Verfahren auf einem Edge Device ausgeführt wird, dass über eine beschränkte Rechenkapazität verfügt. Ein solches Edge Device kann durch den optoelektronischen Sensor, d.h. eine RGBD-Kamera, gegeben sein.

Ein mögliches Modell zur Personenerkennung ist *"OWL-ViT". "OWL-ViT"* verwendet kein CNN, sondern basiert auf einem Vision Transformer. Transformer-Modelle verwenden Mechanismen der Selbstaufmerksamkeit, um die Beziehungen zwischen verschiedenen Teilen der Eingabedaten zu verstehen. Dies ermöglicht es dem Modell, relevante Informationen aus dem gesamten Eingabekontext zu extrahieren Die Transformer Architektur ermöglicht es OWL-ViT mit Bild-Text-Paaren zur arbeiten und Objekte in Bildern zu erkennen, die nicht explizit im Trainingsdatensatz enthalten sind. Dies hat den Vorteil, dass mit dem Modell auch die Erkennung eines spezifischen Körperteils gezielt abgefragt werden kann, wenn beispielsweise die übrigen Modelle das Körperteil nicht erkennen konnten.

Verfahren nach einem der vorherigen Ansprüche, dadurch gekennzeichnet, dass das differenzierte Körpermodell anthropometrische Angaben, insbesondere der relevanten Körperteile, insbesondere nach DIN 33402-2:2005-12 umfasst.

Dies hat den Vorteil, dass das Körpermodell eine Dimensionierung der tatsächlichen Abstände zwischen Landmarken zusätzlich erlaubt. Damit kann der durch das Körpermodell definierte Abstand zwischen insbesondere benachbarten Landmarken als eine Regel zur Überprüfung einer jeweiligen Pose und jeweiligen Körperteile verwendet werden.

In einer Ausführungsform wird aus einer Tiefeninformation, insbesondere des RGBD-optoelektronischen Sensors, auf eine Kontaktart zwischen dem relevanten Körperteil der für die Sicherheitsanwendung relevanten Körperteile der Person und der Maschine geschlossen.

In dieser Ausführungsform ist der optoelektronische Sensor ausgebildet, die Tiefeninformation, d.h. die Entfernungen oder die Abstände von Objekten zum optoelektronischen Sensor, in Form eines Tiefenbildes bereit zu stellen bzw. anzuzeigen, beispielsweise als verschiedene Graustufen oder als unterschiedliche Farben, durch die die jeweiligen Entfernungen des Sensors zu den Objekten, Körperteilen, etc. skaliert sind. Ein solches Tiefenbild stellt dann den Verlauf der Abstände von Objekten, Körperteilen, etc. zum optoelektronischen Sensor grafisch dar. Zum Beispiel sind dunklere Bereiche weiter von dem optoelektronischen Sensor entfernt, während hellere Bereiche näher am Sensor sind. Ist z.B. eine Hand als ein heller Bildbereich gezeigt, der innerhalb eines dunkleren Bereichs verläuft, der einen Roboterarm darstellt, so ist die Hand aus der Perspektive des Sensors vor dem Roboterarm positioniert, d.h. näher an dem optoelektronischen Sensor. Mit anderen Worten, die Hand berührt den Roboterarm zum Zeitpunkt der Aufnahme nicht und die Kontaktart wäre als "nicht-berührend" klassifiziert. Hierbei können unterschiedliche optoelektronische Sensoren unterschiedliche Tiefenbilder aus deren jeweiliger Perspektive erzeugen, so dass beispielsweise eine Berührung zwischen einem Körperteil aus einer weiteren, anderen Perspektive als keine Berührung festgestellt wird. Damit lassen sich die jeweiligen Kontaktarten plausibilisieren.

Die Kontaktart ist bevorzugt dadurch umgesetzt, dass der Verlauf der Tiefeninformationen im Randbereich von jeweiligen Bereichen die Körperteile, Objekte, etc. darstellen, mit denen an diese Bildbereiche angrenzenden Bildbereichen analysiert wird. Ist das Ergebnis der Analyse, dass die Tiefeninformationen in den Randbereichen stetig, gleichmäßig oder glatt in die oder den angrenzenden Bildbereich übergehen, dann handelt es sich um eine Kontaktart, welche als "berührend oder statisch" zu klassifizieren ist. In solch einem Fall liegt die Hand beispielsweise auf dem Objekt oder dem Maschineteil auf. Ist das Ergebnis der Analyse, dass die Tiefeninformationen unstetig, sprungartig oder nicht gleichmäßig in die oder den angrenzenden Bildbereich übergehen, dann handelt es sich um eine Kontaktart, welche als "nicht berührend oder transient" zu klassifizieren ist.

Verfahren nach Anspruch 10, dadurch gekennzeichnet, dass die Kontaktart basierend auf einer Kontur des erkannten relevanten Körperteils als eine statische oder transiente Kontaktart klassifiziert wird.

Unter einer Kontur ist in der vorliegenden Ausführungsform der Randbereich zu verstehen, den ein jeweiliges Objekt, Körperteil, etc. umgibt und durch das das Objekt, Körperteil, etc in seiner Form gegenüber anderen Bereichen abgegrenzt erscheint. Die Kontur kann sich dabei auf den Übergangsbereich zwischen angrenzenden Objekten erstrecken, so dass die Kontur Randbereiche jeweils angrenzender Objekte zumindest teilweise umfasst, um einen Analyse des Verlaufs der Tiefeninformationen in diesen Bereichen zu ermöglichen.

Basierend auf der Kontaktart wird die Sicherheitsreaktion der Maschine der Norm entsprechend differenziert angepasst.

In einer besonders bevorzugten Ausführungsform sind die Modelle zur Erkennung eines relevanten Körperteils der für die Sicherheitsanwendung relevanten Körperteile, vortrainiert sind und die Auswahl weiterer Trainingsdaten nach dem Deployment der Modelle ist repräsentativ für die spezifische Anwendung des Verfahrens und/oder repräsentativ für den spezifischen Kontext der Anwendung des Verfahrens. Unter Deployment ist vorliegend der Prozess zu verstehen, bei dem die jeweiligen trainierten Modelle in die anwendungsspezifische Umgebung überführt werden, um die von dem optoelektronischen Sensor gelieferten realen Daten zu verarbeiten und Vorhersagen zu treffen i.S. einer Körperteil- bzw. Körperhaltungserkennung. Durch die Verwendung von vortrainierten Modellen als Ausgangspunkt kann das Verfahren schnell auf die kundenspezifische Applikation trainiert werden.

In einer weiter bevorzugten Ausführungsform umfassen die Trainingsdaten applikationsspezifische RGBD-Bilddaten der Maschine während des Betriebes der Maschine. Damit kann das Verfahren schnell auf die spezifische Anwendung der Maschine trainiert werden. Eine spezifische Anwendung kann beispielsweise durch einen bestimmten Bewegungsablauf eines Roboterarms ausgebildet sein, bei dem ein Werker im Sicherheitsbereich des Roboterarms teilweise durch diesen verdeckt wird.

In einer weiter bevorzugten Ausführungsform umfassen die Trainingsdaten kundenspezifische RGBD-Bilddaten der Maschine in unterschiedlichen kundenspezifische Arbeitsbereichen. Damit kann das Verfahren schnell auf eine kundenspezifische Anwendung in einer kundenspezifischen Umgebung trainiert werden. Eine kundenspezifische Umgebung kann beispielsweise durch bestimmte Lichtverhältnisse ausgebildet sein, unter denen sich ein Roboterarm bewegt. Dies führt zu einem geringen Kontrastverhältnis zwischen Roboterarm und Werker, wodurch eine Körperteilerkennung erschwert sein kann.

In einer besonders bevorzugten Ausführungsform umfassen die für die Sicherheitsanwendung relevanten Körperteile Hände, Finger, Unterarme, Oberarme, Beine, Kopf, Rumpf.

In einer besonders bevorzugten Ausführungsform stellen mindestens zwei optoelektronische Sensoren, insbesondere RGBD-Kameras, ein jeweiliges Bild des Arbeitsbereichs der Maschine, insbesondere aus unterschiedlichen Perspektiven des Arbeitsbereichs, bereit. Dies hat den Vorteil, dass ein verdecktes Körperteil zumindest auf einem der Bilder, der aus den unterschiedlichen Perspektiven aufgenommenen Bilder, für ein Modell zu erkennen ist, insbesondere dann, wenn sich mehrere Person im Arbeitsbereich der Maschine befinden. Ist eine Verdeckung weniger wahrscheinlich, erhöht sich die Sicherheit der Vorhersage, d.h. die Sicherheit mit der relevante Körperteile erkannt werden. Die optoelektronischen Sensoren werden dazu an unterschiedlichen Raumpunkten im Arbeitsbereich so angebracht, dass aus den Blickwinkeln der optoelektronischen Sensoren eine Verdeckung eines Körperteils einer Person durch die Maschine oder andere Objekte im Arbeitsbereich minimiert wird. Die aus den unterschiedlichen Blickwinkeln der optoelektronischen Sensoren aufgenommenen Bilder werden auf ein gemeinsames Koordinatensystem des Arbeitsbereichs kalibriert. Die Kalibration kann durch statische Objekte (optische Markierungen) erfolgen. Alternativ kann der Boden des Arbeitsbereichs der Maschine als eine Referenz zur Kalibration verwendet werden. Durch die Kalibration entsprechen sich die Koordinatensysteme der aus den unterschiedlichen Perspektiven aufgenommenen Bilder im Wesentlichen.

Die Anzahl der Personen im Arbeitsbereich kann aus der Anzahl erkannter relevanter Körperteile abgeleitet werden und/oder auch aus dem Modell zur Erkennung der Körperhaltung. Alternativ dazu, kann die Anzahl der Personen auch grundsätzlich als ein Übergabeparameter aus dem der Erkennung, insbesondere vorgeschalteten, weiteren Modell stammen, beispielsweise dem beschriebenen Personenerkennungsmodell.

Die Erfindung betrifft ferner ein Computerprogrammprodukt, das Anweisungen enthält, die, wenn das Programm von einem Computer ausgeführt wird, den Computer veranlassen, die Verfahrensschritte nach Anspruch 1 auszuführen.

Weitere bevorzugte Ausgestaltungen des erfindungsgemäßen Verfahrens ergeben sich aus der nachfolgenden Beschreibung der Ausführungsbeispiele in Zusammenhang mit den Figuren und deren Beschreibung. Gleiche Bauteile, bzw. Verfahrensschritte werden im Wesentlichen durch gleiche Bezugszeichen gekennzeichnet, falls dies nicht anders beschrieben wird oder sich nicht anders aus dem Kontext ergibt.
Fig. 1 zeigt eine schematische Darstellung eines Arbeitsbereichs aus der Vogelperspektive, wobei sich in dem Arbeitsbereich eine Maschine und eine Person befindet.
Fig. 2a zeigt eine schematische Darstellung eines Arbeitsbereichs aus der Vogelperspektive eines Sensors (A). In dem Arbeitsbereich befindet sich eine Maschine, zwei Person und ein Objekt.
Fig. 2b zeigt eine weitere schematische Darstellung des Arbeitsbereichs der Maschine aus Fig. 2a aus der Seitenperspektive eines weiteren Sensors (B).
Fig. 3 zeigt den Verfahrensablauf des Verfahrensschritts iii) in einer Ausführungsform schematisch.
Fig. 4 zeigt den Verfahrensablauf des Verfahrensschritts iii) in einer Ausführungsform bei der zwei Sensoren aus jeweils unterschiedlichen Blickwinkeln zwei Personen im Arbeitsbereich einer Maschine erfassen.
Fig. 5 zeigt aus einer Seitenansicht den Arbeitsbereich einer Maschine mit zwei Werkern.
Fig. 6 zeigt die in Fig. 5 dargestellte Seitenansicht, wobei die Posen der Personen skizziert sind, und zwar beispielhaft so, wie sie von dem Modell zur Erkennung einer Körperhaltung erkannt wurden.
Fig. 7 zeigt ein für eine Sicherheitsanwendung definiertes Körpermodell.
Fig. 8 zeigt die 3D-Landmarken H1 - H20 einer linken Hand, welche von dem Modell zur Handerkennung erkannt werden, um die Position der Hand im Raum zu bestimmen.
Fig. 9 zeigt das aus den Körpermodell-3D-Landmarken der Übergabedaten bestimmte Körpermodell einer ersten Person und das eines linken Armes einer zweiten Person.

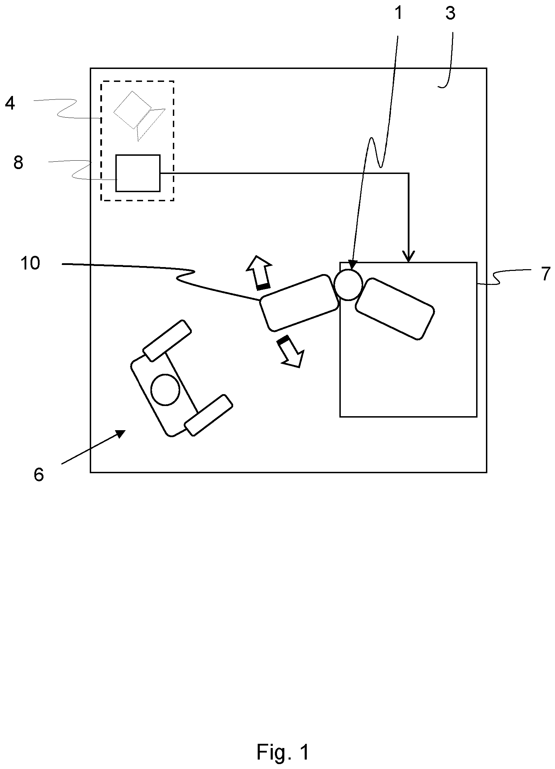

In Fig. 1 ist eine schematische Darstellung des Arbeitsbereichs 3 der Maschine 1 aus der Vogelperspektive mit einer Sicherheitssteuerung 7 gezeigt. Ebenfalls in dem Arbeitsbereich 3 dargestellt ist eine Person 6. In der in Fig. 1 gezeigten Ausführungsform, ist der optoelektronische Sensor 4 als ein Edge Device ausgebildet und umfasst eine RGBD-Kamera sowie eine Auswerteeinheit. Die Auswerteeinheit ist als eine Datenverarbeitungseinheit (DPU) ausgebildet. Unter einer DPU ist eine spezialisierte Hardware-Einrichtung oder ein Software-Framework zu verstehen, die bzw. das für die Verarbeitung mindestens eines vortrainierten neuronalen Netzes, ausgelegt ist. Die Datenverarbeitungseinheit kann beispielsweise ein NPU (Neural Processing Unit) sein, die speziell für die Beschleunigung von Kl-Lernaufgaben ausgelegt ist, eine GPU (Graphics Processing Unit), eine VPU (Vision Processing Unit), die für die Verarbeitung von visuellen Daten optimiert ist, oder eine TPU (Tensor Processing Unit), die spezielle für di Beschleunigung von Kl-Aufgaben, insbesondere für die Arbeit mit Tensor Flow Modellen optimiert ist. Die Datenverarbeitungseinheit ist in der Lage, die Modelle der Verarbeitungskette anwendungsspezifisch weiter zu trainieren. In diesem Fall verfügt das Edge-Device über genügend Rechenleistung, um ein jeweiliges Modell nach dem Deployment der Modelle feinabzustimmen. Das Training der Modell kann nacheinander ausgeführt werden. Daher ist die DPU speziell so ausgelegt, dass sie eine hohe Rechenleistung bei geringem Energieverbrauch bietet. Außerdem ist die DPU vorzugsweise klein und leicht, damit sie in das Gehäuse des Edge-Geräts passt, was die Integration in einen kleinen Formfaktor, z. B. ein System-on-Chip, erfordern kann. Die DPU ermöglicht die Verarbeitung von Bild- und Videodaten in Echtzeit und kann die Modelle der Verarbeitungskette laden und ausführen, wodurch die Implementierungszeit verkürzt, und die Implementierung vereinfacht wird. Durch die Verarbeitung der Daten direkt auf dem Edge-Gerät wird die Latenz vorteilhaft reduziert und die Notwendigkeit, große Datenmengen an zentrale Server zu senden, minimiert. Ein Beispiel für eine solche DPU in der Ausführung als ein GPU, ist der NVIDIA Jetson Orin.

Ein sich bewegender Maschinenteil 10 der Maschine 1 kann sich im Arbeitsbereich 3 nach links und rechts bewegen, was durch jeweilige Pfeile in Fig. 1 angedeutet sein soll. Dem sich bewegenden Maschinenteil 10 nähert sich die Person 6 an. Dabei streckt die Person 6 ihre beiden Arme 11 in Richtung des sich bewegenden Maschineteils 10 aus, weshalb diese durch die Bewegung des Maschineteils 10 gefährdet sind, und daher für die Anwendung der Maschine 1 relevante Körperteile darstellen. Der Sensor 4 erzeugt in regelmäßigen Abständen Bilder des Arbeitsbereichs 3, die die Person 6 und insbesondere den sich bewegenden Maschinenteil 10 zeigen. Die jeweiligen, durch die RGBD-Kamera des Sensors 4 aufgenommenen Bilder, werden in der Datenverarbeitungseinheit der Auswerteeinheit 8 eingelesen und prozessiert. Die Prozessierung der eingelesenen Bilder umfasst die Körperteil- und Körperhaltungserkennung der Person 6 durch die jeweiligen Modelle der Verarbeitungskette. Vorliegend basierend auf der Erkennung der Arme 11 und der Körperhaltung der Person 6 in Schritt 3 des Verfahrens, gibt die Auswerteeinheit 8 einen Steuerbefehl an die Sicherheitssteuerung 7 der Maschine 1 aus, wobei der Steuerbefehl eine Sicherheitsreaktion der Maschine 1 auslösen kann. Beispielsweise wird ein Nothalt ausgelöst, wenn einer oder beide Arme 11 der Person 6 mit einer bestimmten Geschwindigkeit in Richtung des bewegten Maschinenteils 10 bewegen. Die Geschwindigkeit der Bewegung wird aus der Abfolge der aufgenommen Bilder geschlossen, indem die unterschiedlichen Positionen der Arme 11 pro Bild miteinander verglichen werden.

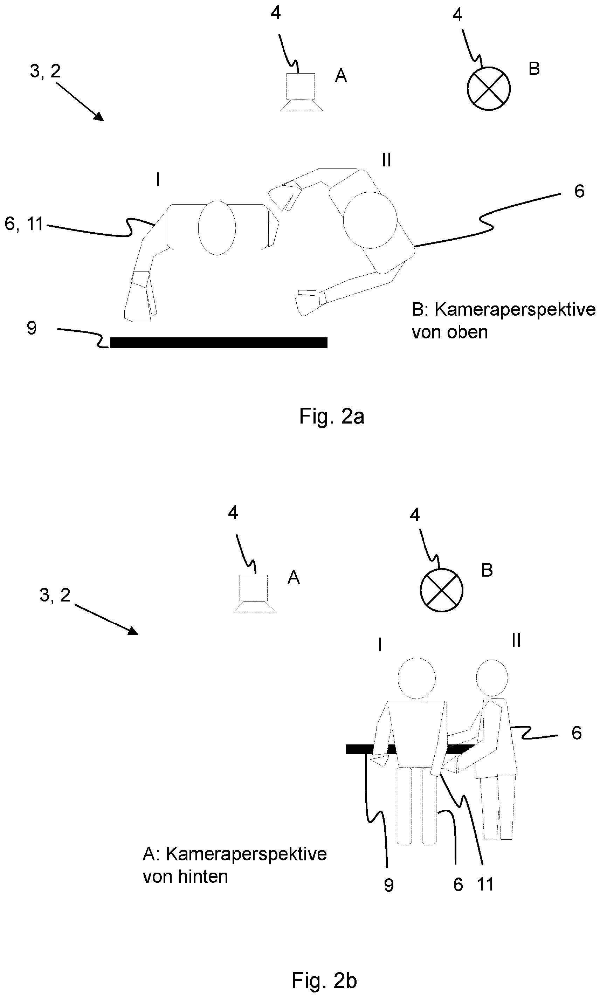

In Fig. 2a ist eine weitere schematische Darstellung des Arbeitsbereichs 3 der Maschine 1 gezeigt, wobei sich in dieser Ausführungsform zwei Person (I, II) 6 vor einem Objekt 9 befinden. Die Szene soll dem Bild 2 entsprechen, dass durch einen Sensor (4) geliefert wird, der auf den Arbeitsbereich 3 aus der Vogelperspektive (A) blickt. Dabei streckt die Person I ihren rechten Arm 11 in Richtung des Objektes 9 aus, während ihr linker Arm am Körper entlang verläuft. In dieser Ausrichtung der Person I zum Sensor 4 wäre somit eine linke Hand nicht erkennbar. Im Gegensatz dazu sind die linke und rechte Hand der weitern Person II im Arbeitsbereich 3 für ein Modell zur Handerkennung aus dem Bild 2 erkennbar angeordnet.

In Fig. 2b ist die in Fig. 2a gezeigte schematische Ansicht des Arbeitsbereichs 3 der Maschine 1 gezeigt. Die Szene soll dem Bild 2 entsprechen, dass durch einen weiteren Sensor (4) gelidert wird, der auf den Arbeitsbereich 3 aus der Seitenperspektive (B) blickt. In dieser Seitenansicht (B) kann der Arm 11 der Person I in dem Bild 2 erkannt werden, nicht aber die Hand der Person I. Ferner ist die rechte Hand der Person II aus dieser Seitenperspektive (B) durch das Objekt 9 verdeckt und kann aus dem Bild 2 durch das Handerkennungsmodell ebenfalls nicht erkannt werden. Verknüpft man die Übergabedaten der Modelle aus den jeweiligen Perspektiven (A, B) der Sensoren 4 miteinander, so ergibt sich eine plausible Position der Hände. In diesem Fall ist die rechte Hand der Person I, z.B. in deren Hosentasche, was sich aus der Position des Armes 11, d.h. der erkannten 3D-Landmarken des Armes 11, in Fig. 2b ergibt. Die Position, der in Fig. 2b verdeckten, rechten Hand der Person II, kann aus der Perspektive B des weiteren Sensors 4 bestimmt werden.

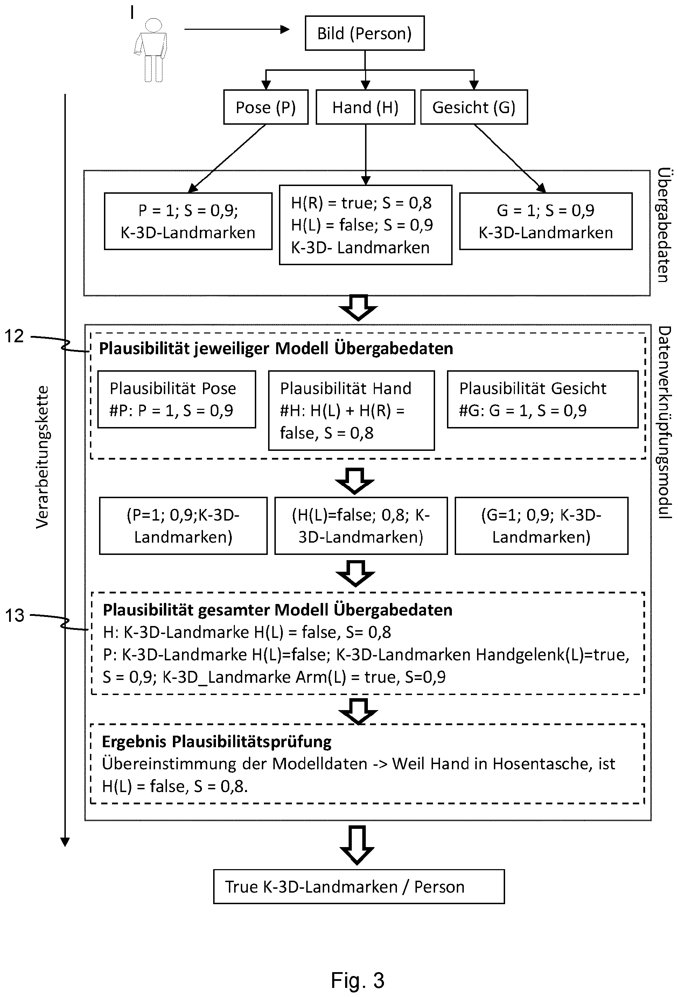

In Fig. 3 ist der Verfahrensablauf des Verfahrensschritts iii) in einer Ausführungsform schematisch dargestellt. Zuerst wird das Bild 2 des Arbeitsbereichs 3, welches die Person 6 zeigt, in die Verarbeitungskette eingegeben. Die Verarbeitungskette umfasst in dieser Ausführungsform vier Detektionskanäle. Ein Modell zur Handerkennung (H-Modell), ein Modell zur Gesichtserkennung (G-Modell) und ein Modell zur Erkennung der Körperhaltung (P-Modell). Die Modelle erkennen auf dem eingegebenen Bild 2 die jeweiligen relevanten Körperteile, auf die sie trainiert wurden. Die Erkennung und NichtErkennung der Körperteile, bzw. der Körperhaltung erfolgt mit einer bestimmten Wahrscheinlichkeit, welche durch den Sicherheitswert (S) in den Übergabedaten zusätzlich zu den 3D-Landmarken der erkannten Körperteile enthalten ist. Im vorliegenden Fall erkennt das Handerkennungsmodell eine linke (L) Hand mit einer Sicherheit von 90%, jedoch keine rechte Hand mit einer Sicherheit von 80%. Die 3D-Landmarken der Körperhaltung und die des Gesichts werden jeweils mit 90% Sicherheit erkannt. Die Übergabedaten werden an das Datenverknüpfungsmodul übergeben, welches in Fig. 3 durch eine Box umrandet schematisch dargestellt ist. Vor Übergabe der Übergabedaten werden die Übergabedaten erzeugt, indem die 3D-Landmarken von Körperteilen den Körpermodell-3D-Landmarken zugeordnet werden. Die Zuordnung kann durch ein weiteres neuronales Netz der Verarbeitungskette erfolgen, dass darauf trainiert ist, die 3D-Landmarken eines jeweiligen Modells auf die Körpermodell-3D-Landmarken zu projizieren, bzw. diesen zuzuordnen. Alternativ kann durch ein Nachtrainieren der vorhandenen Modelle auf das definierte Körpermodell i.S.v. "transfer learning" dieser Schritt hinreichend ausgeführt sein. In der in Fig. 3 dargestellten Ausführungsform erfolgte die Zuordnung mittels transfer learning, weshalb die Erzeugung der Übergabedaten in Fig. 3 nicht als ein separater Schritt dargestellt ist.

Innerhalb des Datenverknüpfungsmoduls sind weitere Verfahrensschritte durch jeweilige Boxen schraffiert gekennzeichnet. Die Verknüpfungen basieren auf am Körpermodell abgeleiteten Regeln bzw. Zuordnungsvorschriften. Diese Regeln können die Entfernung einer erkannten Landmarke zu einer nächsten, beispielsweise unmittelbar benachbarten erkannten oder nicht erkannten Landmarke umfassen, oder die Zuordnung eines Körperteils zu einer jeweiligen Person.

In einem ersten Verfahrensschritt wird die Plausibilität 12 der jeweiligen Übergabedaten der Modelle durch eine Verknüpfung der einzelnen Körperteile miteinander überprüft. Aus den Übergabedaten des P-Modells ergibt sich, dass nur eine Person erkannt wurde (P=1). Aus dem H-Modell resultiert eine Unstimmigkeit der Daten, denn das definierte Körpermodell gibt eine linke und eine rechte Hand als eine Regel vor, ausgedrückt durch z.B. H(L)+H(R) = true. Aus den Übergabedaten ergibt sich aber H(L)+H(R) = false. Bei Erkennung einer linken Hand sollte eine rechte Hand ebenfalls vorhanden sein. Folglich müssen insbesondere die Übergabedaten des H-Modells einer weiteren, zweiten Plausibilitätsprüfung 13 unterzogen werden. In der zweiten Plausibilitätsprüfung 13 liefert eine Verknüpfung des H-Modells mit dem P-Modell, dass das P-Modell die 3D-Landmarke eines linken Handgelenks und eines linken Arms mit einer Sicherheit von jeweils 90% erkannt hat. Man verknüpft die Ergebnisse, beispielsweise indem man überprüft, wie die Positionen der Körpermodell-3D-Landmarken räumlich zueinander entsprechend dem Körpermodell angeordnet sein sollten, wobei das definierte Körpermodell an die jeweilige Pose angepasst ist oder diese zeigt. Wenn zum Beispiel in der Pose, die Körpermodell-3D-Landmarken von Schulter, Ellenbogen, Handgelenk und Hüfte im angepassten Körpermodell entlang einer im Wesentlichen geraden Linie verlaufend angeordnet sind, befindet sich die Hand mit sehr hoher Sicherheit in der Hosentasche und kann nicht erkannt werden. Somit ist basierend auf der Verknüpfung der jeweiligen Körpermodell-3D-Landmarken die Position der nicht erkannten Hand sicher vorhersagbar. In einem weiteren Verfahrensschritt gibt das Datenverknüpfungsmodul die plausibilisierten (true) Körpermodell-3D-Landmarken (3D-LM) der Person 6 oder der Personen 6 aus. Darauf basierend wir in einem weiteren Schritt eine Sicherheitsreaktion der Maschine 1 durch Ausgabe eines Steuerbefehls an die Sicherheitssteuerung 7 der Maschine 1 ausgelöst. Die Sicherheitsreaktion kann zum Beispiel auf dem Abstand zwischen der erkannten linken Hand und dem sich bewegenden Teil der Maschine 10, wie in Fig. 1 dargestellt, abgeleitet werden.

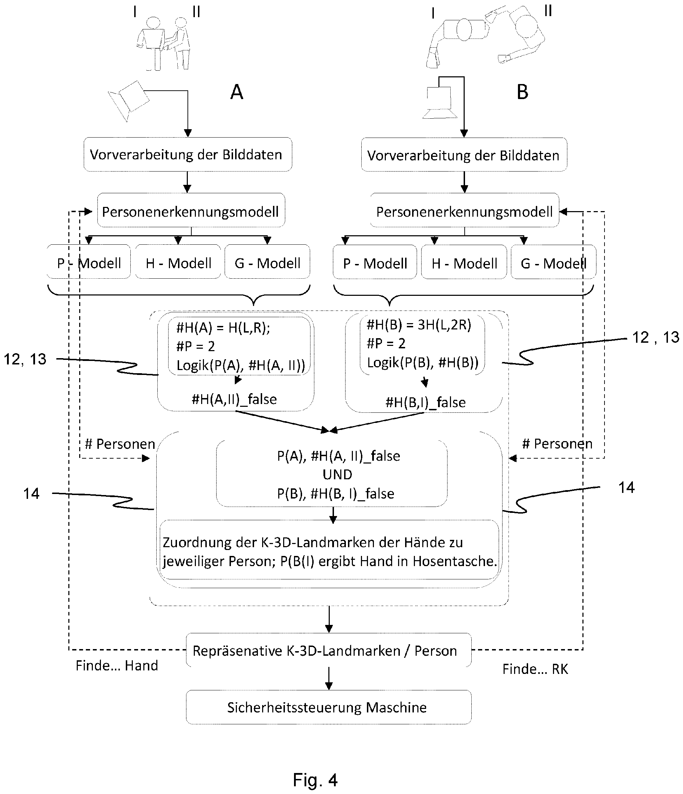

In Fig. 4 ist der Verfahrensablauf des Verfahrensschritts iii) in einer Ausführungsform gezeigt, bei der zwei Sensoren 4 aus jeweils zwei unterschiedlichen Blickwinkeln A, B zwei Personen 6 im Arbeitsbereich 3 einer Maschine 1 erfassen. Werden zwei oder mehr optoelektronische Sensoren 4 verwendet, kann ein jeweiliges Modell zur Erkennung eines relevanten Körperteils für jeweils ein Bild 2 eines optoelektronischen Sensors zuständig sein, so wie es in Fig 4 dargestellt ist, oder alternativ dazu, kann abwechselnd das Bild 2 eines ersten Sensors 4 und dann das Bild 2 eines zweiten optoelektronischen Sensors 4 von den Modellen prozessiert werden. Das von dem ersten optoelektronischen Sensor 4 aus der Seitenansicht des Arbeitsbereichs 3 (Blickrichtung A) aufgenommene Bild 2, entspricht dem in Fig. 2b dargestellten Bild 2 der Person 6 I und II und das aus der Draufsicht des Arbeitsbereichs 3 (Blickrichtung B) aufgenommene Bild 2, entspricht dem in Fig. 2b dargestellten Bild 2 der Person 6 I und II. Die Bilder 2 werden wie in Fig. 4 gezeigt, in zwei voneinander getrennte Verarbeitungskanäle der Verarbeitungskette eingegeben. Voneinander getrennte Verarbeitungskanäle der Verarbeitungskette sind dadurch gekennzeichnet, dass sie die Bilder 2 aus nur einer Sensorperspektive auswerten. Vorliegend wertet ein jeweiliges P-, H- und G-Modell die Bilder 2 einer Perspektive A eines ersten Sensors 4 bzw. einer Perspektive B eines zweiten Sensors 4 getrennt voneinander aus.

In der in Fig. 4 dargestellten Ausführungsform sind die in Fig. 3 getrennt dargestellten ersten 12 und zweiten 13 Plausibilitätsprüfungen der Übergabedaten für das Bild 2 aus einer jeweiligen Perspektive A, B in einer Box 12, 13 zusammengefasst gezeichnet. Die Auswertung des Bildes 2 durch das H-Modell aus dem Blickwinkel A, ergibt eine rechte Hand und eine linke Hand (#H(A) = H(R, L)). Die Auswertung durch das P-Modell ergibt zwei Personen (#P=2) und die weiteren 3D-Landmarken wie z.B. Arme, Handgelenke der jeweiligen Personen I, II. Somit muss das Ergebnis des H-Modells z.B. durch die weiteren vom P-Modell erkannten Körpermodell-3D-Landmarken überprüft werden. Die weitere Plausibilitätsprüfung 13, d.h. die Verknüpfung der jeweiligen Übergabedaten des H- und P-Modells (Logik (P(A), #H(A)) liefert wie zu Fig. 3 beschrieben, ein sinnvolles Ergebnis für die linke Hand der Person I, nicht aber für die rechte Hand der Person II, weshalb das Ergebnis der zweiten Plausibilitätsprüfung #H(A, P=II) = false bestehen bleibt. Analog dazu wird in dem in Fig. 4 dargestellten Fall auch für die Perspektive B, #H(B, P=I) = false übergeben, denn hier wird die linke Hand der Person I 6 nicht erkannt. Die Ergebnisse basieren darauf, dass wie in den Skizzen aus Fig. 2a, b angedeutet, in beiden Perspektiven A, B eine Hand durch die andere Person 6 I, II verdeckt ist. In einer dritten Plausibilitätsprüfung 14, die durch eine weitere Box in der in Fig. 4 dargestellten Verarbeitungskette umrandet dargestellt ist, werden die Ergebnisse der ersten 12 und zweiten 13 Plausibilitätsprüfungen miteinander verknüpft und zwar gemäß der jeweiligen Pose, die das definierte Körpermodell für diesen Fall zeigt. In dem hier beschriebenen Fall liefern die Übergabedaten der Perspektive A die fehlenden Koordinaten der rechten Hand der Person I 6, d.h. aus H(A, P=I, L) ergibt sich H(B,P=I, L) und aus H(B,P=II, R) ergibt sich H(A,P=II, R). Somit ist das Ergebnis der Modellauswertungen plausibilisiert. Die Verknüpfung der jeweiligen Perspektiven A, B in einer weiteren Plausibilitätsprüfung III erhöht die Vorhersagesicherheit der Verarbeitungskette und damit die Sicherheit des Verfahrens zur Absicherung der Arbeitsbereichs 3 der Maschine 1. Das Ergebnis in Verfahrensschritt iii) wird in Form repräsentativer (true) Körpermodell-3D-Landmarken der relevanten Körperteile pro Person nach weitere Auswertung als ein Steuerbefehl an eine Sicherheitssteuerung 7 der Maschine 1 übergeben. Die Auswertung kann darin bestehen, den Abstand eines oder mehrerer relevanter Körperteile zu dem sich bewegenden Maschinenteil 10 zu berechnen und darauf basiert einen an das jeweilige Körperteil, z.B. dessen Biomechanik, Geschwindigkeit, etc. angemessenen Steuerbefehl auszugeben. Die in Fig. 4 dargestellte Verarbeitungskette umfasst weiter ein Personenerkennungsmodell. In der in Fig. 4 gezeigten Ausführungsform ist das Personenerkennungsmodell als den übrigen Modellen vorangestellt in der Verarbeitungskette abgebildet. Das Personenerkennungsmodell kann aber auch Teil des Modells zur Erkennung einer Körperhaltung sein. D.h. die gewählte Darstellung der Architektur soll lediglich den Ablauf der Personenerkennung veranschaulichen. Ferner sind in Fig. 4 zwei Modelle zur Personenerkennung gezeigt. Dies ist soll nicht als eine Einschränkung auf zwei Modelle zu verstehen sein, sondern kann gleichermaßen durch ein einzelnes Modell erfolgen. Dazu können die Bilder der jeweiligen Perspektiven A, B z.B. nacheinander durch das Personenerkennungsmodell erkannt werden. Das Personenerkennungsmodell übergibt die Anzahl der im Bild 2 erkannten Personen 6 an das Datenverknüpfungsmodul der Verarbeitungskette, so dass die Personenanzahl beispielsweise als Übergabeparameter für eine der Plausibilitätsprüfungen 12, 13, 14 im Datenverknüpfungsmodul zur Verfügung steht. In der in Fig. 4 dargestellten Ausführungsform ist das Personenerkennungsmodell als ein Vision Transformer Modell ausgebildet, wie beispielsweise *"OWL-ViT".* Das Modell kann daher Informationen aus einem Eingabekontext extrahieren und erkennen. Mit andern Worten, die Transformer Architektur ermöglicht es OWL-ViT mit Bild-Text-Paaren zur arbeiten und Objekte in Bildern zu erkennen, die nicht explizit im Trainingsdatensatz enthalten sind. Wenn beispielsweise ein relevantes Körperteil nach den Plausibilitätsprüfungen nicht zugeordnet werden kann, ist es in der in Fig. 4 dargestellten Ausführungsform möglich, dass das relevante Körperteil durch einen Eingabetext, welcher automatisiert aufgrund des Ergebnisses der Plausibilitätsprüfungen erstellt werden kann, erneut und gezielt auf dem eingegebenen Bildern 2 für eine jeweilige Perspektive A, B gesucht wird. Diese Möglichkeit einer Such-Iteration ist durch die gestrichelt gezeichneten Pfeile vom Ende der Verarbeitungskette zum Personenerkennungsmodell schematisch angedeutet, wobei die Pfeile zusätzlich mit dem Befehlstext "Finden ... Hand" bzw. "Finde relevantes Körperteil (RK)" versehen sind. Die Such-Iteration verbessert die Vorhersagequalität der Verarbeitungskette weiter vorteilhaft.

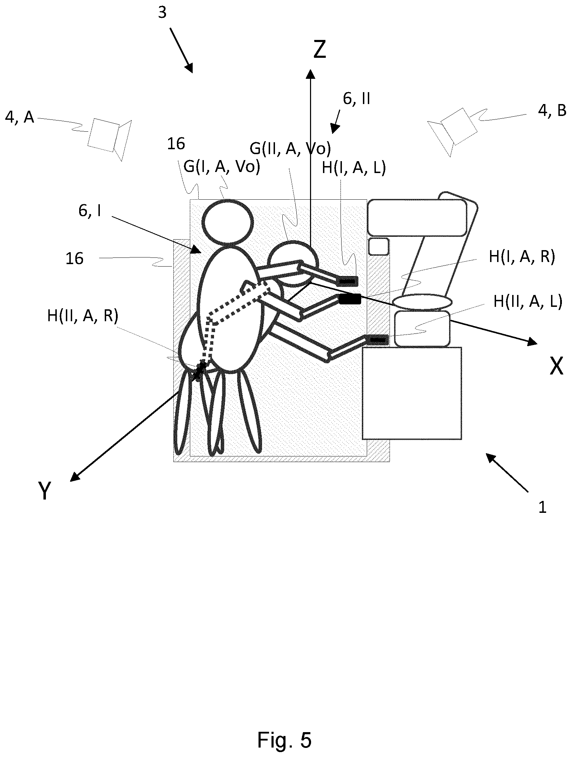

In Fig. 5 ist der Arbeitsbereich 3 einer Maschine 1 mit zwei Werkern 6 aus einer Seitenansicht schematisch dargestellt. Die Seitenansicht entspricht dem Blickwinkel A aus dem der Sensor 4, A ein Bild des Arbeitsbereichs 3 aufnimmt. In der in Fig. 5 gezeigten Ausführungsform wird der Arbeitsbereich 3 durch insgesamt zwei optoelektronische Sensoren 4 optisch erfasst, wobei zumindest einer als ein Edge Device zur Durchführung des Verfahrens ausgebildet ist. Im Arbeitsbereich 3 sind zwei Personen 6, I, II skizziert. Die Hände der Personen 6, I, II sind durch schwarze rechteckförmige Bereiche markiert, was die jeweiligen Begrenzungsboxen 16 des Modells zur Handerkennung (H-Modell) darstellen soll. Eine Begrenzungsbox 16 umrandet die jeweils von dem Modell erkannte Hand. Die Begrenzungsboxen 16 können Teil der Übergabedaten eines jeweiligen Modells sein. In Fig. 5 soll die Abkürzung H(I, A, L) eine von dem Modell erkannte linke Hand der Person 6, I aus der Perspektive A kennzeichnen. Entsprechend, soll die Abkürzung G(I, A, Vo) das vom Modell erkannte Gesicht der Person I, d.h. deren Vorderseite kennzeichnen aus der Perspektive A kennzeichnen, und die Abkürzung G(I, A, Hi) deren Hinterseite. Die Person I streckt beide Arme 11 in Richtung der Maschine 1. Die Person II streckt lediglich ihren linken Arm 11 in Richtung der Maschine 1. Der rechte Arm 11 der Person II ist durch den Oberkörper der Person I nicht sichtbar. Allerdings wird die rechte Hand der Person II H(II, A, R) durch das Handerkennungsmodell detektiert. Die Bereiche der Person I, II sind in Fig. 5 von einer ersten schraffierten Box und von einer zweiten schraffierten Box überlagert dargestellt. Die jeweiligen Boxen sollen die Bereiche andeuten, die durch ein Modell der Personenerkennung für die Person I, bzw. II als Personenbereiche automatisch markiert wurden. Die Erkennung relevanter Körperteile und der Körperhaltung einer jeweiligen Person 6 ist auf diese Personenbereiche beschränkt was den Rechenaufwand des Verfahrens vorteilhaft begrenzt.

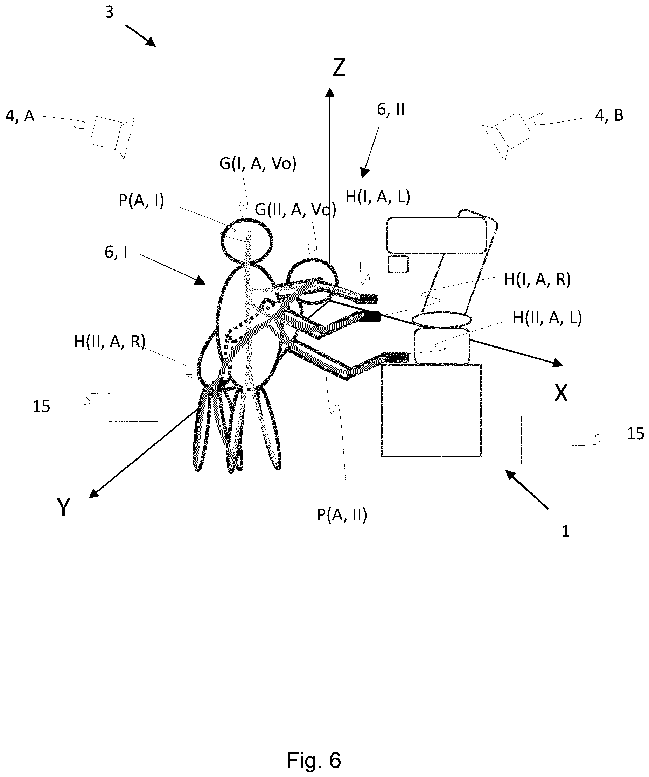

In Fig. 6 ist die in Fig. 5 dargestellte Seitenansicht schematisch gezeigt und um die von dem Modell zur Erkennung einer Körperhaltung erkannten Posen der Person I, II ergänzt, wobei eine jeweilige Pose mit einer durchgehenden Linie dargestellt ist. In der gezeigten Ausführungsform hat das Körperhaltungsmodell den gestrichelt eingezeichneten, verdeckten rechten Arm der Person II nicht erkannt. Das Modell ordnet der Person den rechten Arm der Person I ebenfalls der Person II zu. In diesem Fall würde bereits die erste Plausibilitätsprüfung I 12 einen Fehlerwert ausgeben, da die Landmarken der Pose des rechten Armes beider Personen I, II übereinstimmen. Ein Vergleich mit den Übergabedaten des Handmodells würde aus der in Fig. 6 gezeigten Seitenansicht wahrscheinlich nicht zu einer Plausibilisierung führen, sondern erst eine Verknüpfung der unterschiedlichen Perspektiven A, B der beiden Sensoren 4. Die unterschiedlichen Perspektiven A, B werden, durch die in Fig. 6 skizzierten QR-Codes 15 so kalibriert, dass sich die Koordinaten der aus den Perspektiven A, B durch die Sensoren 4 aufgenommenen Bilder 2 im Wesentlichen entsprechen. Das Verfahren weist deshalb bevorzugt zwei optoelektronische Sensoren 4 auf, wobei mindestens einer der Sensoren 4 als ein Edge Device ausgebildet ist, so dass das Verfahren auf dem Edge Device ausführbar ist.

Fig. 7 zeigt ein für eine Sicherheitsanwendung definiertes Körpermodell. Das Körpermodell weist eine Vielzahl von Markierungspunkten 16 auf, die sich auf 3D-Landmarken beziehen und von den jeweiligen Modellen erkannt werden sollen. Dabei kann das Modell durch Erkennung der mit 1 bis 3 gekennzeichneten Landmarken ein Gesicht bestimmen und somit die Vorderseite einer Person 6. Im Vergleich dazu verweisen beispielsweise die Landmarken 4, 5 und 7 auf die Hinterseite einer Person 6. Somit ist es möglich aufgrund der Erkannten 3D-Landmarken zwischen einer Vorder- und einer Rückseite einer Person 6 im Arbeitsbereich 3 einer Maschine 1 zu unterscheiden. Diese Unterscheidung ermöglich es vorteilhaft, dass die Sicherheitsreaktion der Maschine 1 an eine Vorder- bzw. Rückseite einer Person 6 differenziert erfolgt. Beispielsweise kann eine Person 6, wenn sie mit dem Rücken zu der Maschine 1 steht, ihre Arme 11 weniger leicht in Richtung der Maschine 1 bewegen, als wenn sie mit ihrer Vorderseite vor der Maschine 1 steht. Ebenfalls erlaubt das Modell vorteilhaft eine differenzierte Sicherheitsreaktion je nachdem ob ein Arm (3D-Landmarke 16) oder ein Fingerspitze (3D-Landmarke 18) erkannt werden. Die Modelle zur Erkennung der relevanten Körperteile, wie auch das Modell zur Erkennung der Körperhaltung weisen eine Vielzahl weiterer 3D-Landmarken auf, wobei diese 3D-Landmarken, die des differenzierten Körpermodells umfassen können. In einer bevorzugten Ausführungsform, können weitere 3D-Landmarken auf dem bereitgestellten differenzierten Körpermodell durch einen Benutzer des Verfahrens mittels einer Benutzerschnittstelle markiert werden. In einer Ausführungsform ist die Benutzerschnittstelle durch ein graphische Schnittstelle, beispielsweise durch ein Mobiltelefon mit dem Edge Device verbunden. Die in Fig. 7 dargestellten Körpermodell-3D-Landmarken werden mit den 3D-Landmarken verknüpft. Dies kann durch tranfer learning geschehen, oder durch eine Verknüpfungsschritt. Die Verknüpfung kann durch ein neuronales Netz ausgeführt werden, dass darauf trainiert ist, die 3D-Landmarken eine Modells zur Körperteilerkennung bzw. des Modells zur Erkennung der Körperhaltung auf die in dem definierten Körpermodell spezifizierten Körpermodell-3D-Landmarken abzubilden. Das in Fig. 7 gezeigte Körpermodell zeigt die Positionen der Körpermodell-3D-Landmarken in einer bestimmten Pose, in der die relevanten Körperteile durch geradlinige Verbindungen der Landmarken angedeutete sind. Daraus ergibt sich eine für diese Pose bestimmte Zuordnungsvorschrift. Zum Beispiel ist die Anordnung der Arme, Hände und Beine im Wesentlichen symmetrisch zu einer vertikalen Linie, die den Körper in zwei im Wesentlichen gleich große Bereich unterteilt. Ein daran abgeleitete Regel könnte sein, dass H(L) = - H(R). Je nach Pose ergeben sich andere Zuordnungsvorschriften. Die Abstände der Körpermodell-3D-Landmarken können zusätzlich an biologische Maße angepasst sein, wie die Länge der Arme, Bein usw.

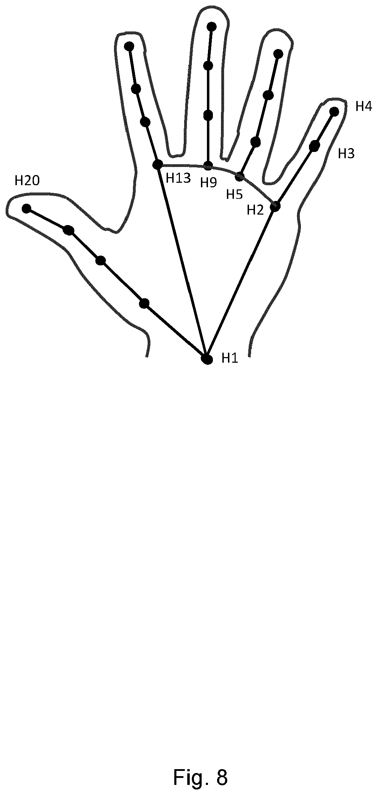

Fig. 8 zeigt die 3D-Landmarken H1 - H20 einer linken Hand, welche von dem Modell zur Handerkennung erkannt werden, um die Position der Hand im Raum zu bestimmen. Die 3D-Landmarke H1 wäre demnach mit der Körpermodell-3D-Landmarke 15 zu identifizieren und H20, die Position des Daumens, mit 21 in Fig. 7. Damit ist die Orientierung der Hand durch das definierte Körpermodell eindeutig vorgegeben.

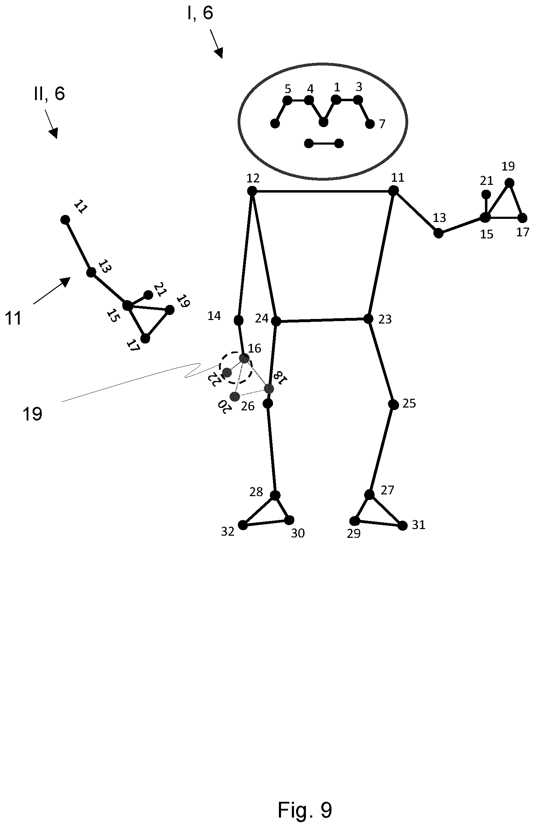

Fig. 9 zeigt das aus den Körpermodell-3D-Landmarken der Übergabedaten bestimmte Körpermodell einer ersten Person I, 6 und den linken Arm 11 einer zweiten Person II, 6 in einer speziellen Pose. Die Pose gibt einen Abstand zwischen den Körperteil-3D-Landmarken des Ellenbogens 14 und der Hüfte 24 vor. Damit kann der rechte Arm sicher der Person I zugeordnet werden und nicht der teilweise dargestellte Arm der Person II. Ferner können die Landmarken 18, 20 und 22 von dem Modell zur Handerkennung nicht detektiert werden, weshalb die Verbindungslinien in Fig. 9 mit einer dünneren gestrichelten Linie als die übrigen Körperteile der Person I angedeutet sind. Aus dem Körpermodell ergeben sich die Abstände zwischen der Landmarke 16 und den Landmarken 18, 20 und 22 als die Länge der Verbindungslinien zwischen den Landmarken. Die Landmarke 16 positioniert das Handgelenk im Raum und ordnet den weiteren Landmarken dadurch ebenfalls eine Position im Raum zu. Die Zuordnung ergibt, dass sich beispielsweise die Landmarke 22 innerhalb des Abstandes R befindet, der durch einen in Fig. 9 gestrichelt eingezeichneten Kreis angedeutet ist. Das entspricht einem Erwartungsbereich 19 innerhalb dem sich die Landmarke sicher befindet.

### Liste der Bezugszeichen

- 1: Maschine
- 2: Bild
- 3: Arbeitsbereich
- 4: Sensor
- 5: Körpermodell
- 6: Person
- 7: Sicherheitssteuerung
- 8: Auswerteeinheit
- 9: Objekt
- 10: Bewegter Maschinenteil
- 11: Arm
- 12: Plausibilitätsprüfung I
- 13: Plausibilitätsprüfung II
- 14: Plausibilitätsprüfung III
- 15: QR-Code
- 16: Markierungspunkte
- 17: Bounding Box (Begrenzungsbox)
- 18: A, B = Perspektiven
- 19: Erwartungsbereich

## Patentansprüche

1. Computerimplementiertes Verfahren zur Absicherung einer Maschine (1), aufweisend die folgenden Schritte:
i. Bereitstellen mindestens eines Bildes (2) eines Arbeitsbereichs (3) der Maschine (1) durch mindestens einen optoelektronischen Sensor (4), insbesondere durch eine RGBD-Kamera;
ii. Bereitstellen eines für eine Sicherheitsanwendung durch Vorgabe eines durch Körpermodell-3D-Landmarken definierten Körpermodells (5), so dass anhand der Körpermodell-3D-Landmarken die Positionen von für die Sicherheitsanwendung relevanten Körperteilen von mindestens einer Person (6) in dem Arbeitsbereich (3) der Maschine (1) bestimmbar sind;
iii. Eingabe des Bildes (2) in eine Verarbeitungskette, welche auf neuronalen Netzen basierende Modelle zur Erkennung von 3D-Landmarken (17) von Körperteilen umfasst, wobei jeweils mindestens ein Modell der Verarbeitungskette eingerichtet ist, die 3D-Landmarken eines relevanten Körperteils, der für die Sicherheitsanwendung relevanten Körperteile der mindestens einen Person (6), zu erkennen und mindestens ein Modell eingerichtet ist, eine Körperhaltung der mindestens einen Person (6) zu erkennen;
iv. Ausgabe eines Steuerbefehls an eine Sicherheitssteuerung (7) der Maschine (1), um eine Sicherheitsreaktion der Maschine (1) auszulösen, wobei die Sicherheitsreaktion der Maschine (1) auf der Erkennung der für die Sicherheitsanwendung relevanten Körperteile und/oder auf der Erkennung der Körperhaltung der mindestens einen Person (6) basiert.

2. Verfahren nach Anspruch 1, **dadurch gekennzeichnet, dass** die von den Modellen erkannten 3D-Landmarken (17) von Körperteilen den Körpermodell-3D-Landmarken der relevanten Körperteile zugeordnet werden und als Übergabedaten an ein Datenverknüpfungsmodul der Verarbeitungskette übergeben werden.

3. Verfahren nach Anspruch 2, **dadurch gekennzeichnet, dass** in Schritt iii) mittels einer Datenverknüpfung des Datenverknüpfungsmoduls die Körpermodell-3D-Landmarken (17) der Übergabedaten anhand des Körpermodells auf Plausibilität und Vollständigkeit überprüft werden und dass anhand der überprüften Körpermodell-3D-Landmarken auf von den Modellen nicht erkannte Körpermodell-3D-Landmarken des Körpermodells geschlossen wird, um die Erkennung der Körpermodell-3D-Landmarken des Körpermodells zu vervollständigen.

4. Verfahren nach Anspruch 3, **dadurch gekennzeichnet, dass** in einer ersten Verknüpfung die Übergabedaten des jeweils mindestens einen, zur Erkennung von 3D-Landmarken eines relevanten Körperteils eingerichteten Modells, innerhalb des jeweiligen Modells miteinander verknüpft werden und dass in einer zweiten Verknüpfung die Übergabedaten der jeweiligen, zur Erkennung von 3D-Landmarken der relevanten Körperteile eingerichteten Modelle, über die Modelle hinweg untereinander verknüpft werden.

5. Verfahren nach einem der vorherigen Ansprüche, **dadurch gekennzeichnet, dass** das Modell zur Erkennung der Körperhaltung eingerichtet ist, auch die Körpermodell-3D-Landmarken der für die Sicherheitsanwendung relevanten Körperteile zumindest teilweise zu erkennen.

6. Verfahren nach einem der vorherigen Ansprüche, **dadurch gekennzeichnet, dass** mindestens ein Modell der Modelle eingerichtet ist, anhand des Körpermodells, zwischen einer Vorder- und Rückseite einer Person zu differenzieren.

7. Verfahren nach einem der vorherigen Ansprüche, **dadurch gekennzeichnet, dass** mindestens ein Modell der Modelle eingerichtet ist, anhand des Körpermodells, Hände als relevante Körperteile, der für die Sicherheitsanwendung relevanten Körperteile zu erkennen und mindestens ein Modell eingerichtet ist, Gesichter als relevante Körperteile, der für die Sicherheitsanwendung relevanten Körperteile zu erkennen.

8. Verfahren nach einem der vorherigen Ansprüche, **dadurch gekennzeichnet, dass** mindestens ein Modell der Modelle eingerichtet ist, einen Bereich der mindestens einen Person als einen Personenbereich in dem eingegebenen Bild abzugrenzen.

9. Verfahren nach einem der vorherigen Ansprüche, **dadurch gekennzeichnet, dass** das differenzierte Körpermodell anthropometrische Angaben, insbesondere der relevanten Körperteile, insbesondere nach DIN 33402-2:2005-12 umfasst.

10. Verfahren nach einem der vorherigen Ansprüche, insbesondere nach Anspruch 9, **dadurch gekennzeichnet, dass** aus einer Tiefeninformation, insbesondere des optoelektronischen Sensors, auf eine Kontaktart zwischen dem relevanten Körperteil der für die Sicherheitsanwendung relevanten Körperteile der Person und der Maschine geschlossen werden kann.

11. Verfahren nach Anspruch 10, **dadurch gekennzeichnet, dass** die Kontaktart basierend auf einer Kontur des erkannten relevanten Körperteils als eine statische oder transiente Kontaktart klassifiziert wird.

12. Verfahren nach einem der vorherigen Ansprüche, **dadurch gekennzeichnet, dass** die Modelle zur Erkennung eines relevanten Körperteils der für die Sicherheitsanwendung relevanten Körperteile, vortrainiert sind und die Auswahl weiterer Trainingsdaten repräsentativ für die spezifische Anwendung des Verfahrens ist.

13. Verfahren nach einem der vorherigen Ansprüche, **dadurch gekennzeichnet, dass** die Trainingsdaten applikationsspezifische RGBD-Bilddaten der Maschine während des Betriebes der Maschine umfassen und/oder dass die Trainingsdaten kundenspezifische RGBD-Bilddaten der Maschine in unterschiedlichen kundenspezifischen Arbeitsbereichen umfassen.

14. Verfahren nach einem der vorherigen Ansprüche, **dadurch gekennzeichnet, dass** die für die Sicherheitsanwendung relevanten Körperteile Hände, Finger, Unterarme, Oberarme, Beine, Kopf, Rumpf umfassen.

15. Verfahren nach einem der vorherigen Ansprüche, **dadurch gekennzeichnet, dass** mindestens zwei optoelektronische Sensoren, insbesondere RGBD-Kameras, ein jeweiliges Bild des Arbeitsbereichs der Maschine, insbesondere aus unterschiedlichen Perspektiven des Arbeitsbereichs, bereitstellen.

## Geänderte Patentansprüche

### Geänderte Patentansprüche gemäss Regel 137(2) EPÜ.

1. Computerimplementiertes Verfahren zur Absicherung einer Maschine (1), aufweisend die folgenden Schritte:
i. Bereitstellen mindestens eines Bildes (2) eines Arbeitsbereichs (3) der Maschine (1) durch mindestens einen optoelektronischen Sensor (4), insbesondere durch eine RGBD-Kamera;
ii. Bereitstellen eines für eine Sicherheitsanwendung durch Vorgabe eines durch Körpermodell-3D-Landmarken definierten Körpermodells (5), so dass anhand der Körpermodell-3D-Landmarken die Positionen von für die Sicherheitsanwendung relevanten Körperteilen von mindestens einer Person (6) in dem Arbeitsbereich (3) der Maschine (1) bestimmbar sind;
iii. Eingabe des Bildes (2) in eine Verarbeitungskette, welche auf neuronalen Netzen basierende Modelle zur Erkennung von 3D-Landmarken (17) von Körperteilen umfasst, wobei jeweils mindestens ein Modell der Verarbeitungskette eingerichtet ist, die 3D-Landmarken eines relevanten Körperteils, der für die Sicherheitsanwendung relevanten Körperteile der mindestens einen Person (6), zu erkennen und mindestens ein Modell eingerichtet ist, eine Körperhaltung der mindestens einen Person (6) zu erkennen;
iv. Ausgabe eines Steuerbefehls an eine Sicherheitssteuerung (7) der Maschine (1), um eine Sicherheitsreaktion der Maschine (1) auszulösen, wobei die Sicherheitsreaktion der Maschine (1) auf der Erkennung der für die Sicherheitsanwendung relevanten Körperteile und/oder auf der Erkennung der Körperhaltung der mindestens einen Person (6) basiert.

2. Verfahren nach Anspruch 1, **dadurch gekennzeichnet, dass** die von den Modellen erkannten 3D-Landmarken (17) von Körperteilen den Körpermodell-3D-Landmarken der relevanten Körperteile zugeordnet werden und als Übergabedaten an ein Datenverknüpfungsmodul der Verarbeitungskette übergeben werden.

3. Verfahren nach Anspruch 2, **dadurch gekennzeichnet, dass** in Schritt iii) mittels einer Datenverknüpfung des Datenverknüpfungsmoduls die Körpermodell-3D-Landmarken (17) der Übergabedaten anhand des Körpermodells auf Plausibilität und Vollständigkeit überprüft werden und dass anhand der überprüften Körpermodell-3D-Landmarken auf von den Modellen nicht erkannte Körpermodell-3D-Landmarken des Körpermodells geschlossen wird, um die Erkennung der Körpermodell-3D-Landmarken des Körpermodells zu vervollständigen.

4. Verfahren nach Anspruch 3, **dadurch gekennzeichnet, dass** in einer ersten Verknüpfung die Übergabedaten des jeweils mindestens einen, zur Erkennung von 3D-Landmarken eines relevanten Körperteils eingerichteten Modells, innerhalb des jeweiligen Modells miteinander verknüpft werden und dass in einer zweiten Verknüpfung die Übergabedaten der jeweiligen, zur Erkennung von 3D-Landmarken der relevanten Körperteile eingerichteten Modelle, über die Modelle hinweg untereinander verknüpft werden.

5. Verfahren nach einem der vorherigen Ansprüche, **dadurch gekennzeichnet, dass** das Modell zur Erkennung der Körperhaltung eingerichtet ist, auch die Körpermodell-3D-Landmarken der für die Sicherheitsanwendung relevanten Körperteile zumindest teilweise zu erkennen.

6. Verfahren nach einem der vorherigen Ansprüche, **dadurch gekennzeichnet, dass** mindestens ein Modell der Modelle eingerichtet ist, anhand des Körpermodells, zwischen einer Vorder- und Rückseite einer Person zu differenzieren.

7. Verfahren nach einem der vorherigen Ansprüche, **dadurch gekennzeichnet, dass** mindestens ein Modell der Modelle eingerichtet ist, anhand des Körpermodells, Hände als relevante Körperteile, der für die Sicherheitsanwendung relevanten Körperteile zu erkennen und mindestens ein Modell eingerichtet ist, Gesichter als relevante Körperteile, der für die Sicherheitsanwendung relevanten Körperteile zu erkennen.

8. Verfahren nach einem der vorherigen Ansprüche, **dadurch gekennzeichnet, dass** mindestens ein Modell der Modelle eingerichtet ist, einen Bereich der mindestens einen Person als einen Personenbereich in dem eingegebenen Bild abzugrenzen.

9. Verfahren nach einem der vorherigen Ansprüche, **dadurch gekennzeichnet, dass** das differenzierte Körpermodell anthropometrische Angaben, insbesondere der relevanten Körperteile, insbesondere nach DIN 33402-2:2005-12 umfasst.

10. Verfahren nach einem der vorherigen Ansprüche, insbesondere nach Anspruch 9, **dadurch gekennzeichnet, dass** aus einer Tiefeninformation, insbesondere des optoelektronischen Sensors, auf eine Kontaktart zwischen dem relevanten Körperteil der für die Sicherheitsanwendung relevanten Körperteile der Person und der Maschine geschlossen werden kann.

11. Verfahren nach Anspruch 10, **dadurch gekennzeichnet, dass** die Kontaktart basierend auf einer Kontur des erkannten relevanten Körperteils als eine statische oder transiente Kontaktart klassifiziert wird.

12. Verfahren nach einem der vorherigen Ansprüche, **dadurch gekennzeichnet, dass** die Modelle zur Erkennung eines relevanten Körperteils der für die Sicherheitsanwendung relevanten Körperteile, vortrainiert sind und die Auswahl weiterer Trainingsdaten repräsentativ für die spezifische Anwendung des Verfahrens ist.

13. Verfahren nach einem der vorherigen Ansprüche, **dadurch gekennzeichnet, dass** Trainingsdaten applikationsspezifische RGBD-Bilddaten der Maschine während des Betriebes der Maschine umfassen und/oder dass die Trainingsdaten kundenspezifische RGBD-Bilddaten der Maschine in unterschiedlichen kundenspezifischen Arbeitsbereichen umfassen.

14. Verfahren nach einem der vorherigen Ansprüche, **dadurch gekennzeichnet, dass** die für die Sicherheitsanwendung relevanten Körperteile Hände, Finger, Unterarme, Oberarme, Beine, Kopf, Rumpf umfassen.

15. Verfahren nach einem der vorherigen Ansprüche, **dadurch gekennzeichnet, dass** mindestens zwei optoelektronische Sensoren, insbesondere RGBD-Kameras, ein jeweiliges Bild des Arbeitsbereichs der Maschine, insbesondere aus unterschiedlichen Perspektiven des Arbeitsbereichs, bereitstellen.
